# EUROPÄISCHE PATENTSCHRIFT

(11) **EP 1 763 666 B1**
(45) Veröffentlichungstag und Bekanntmachung des Hinweises auf die Patenterteilung: **25.01.2012**
(21) Anmeldenummer: 05754697.0
(22) Anmeldetag: 17.05.2005
(51) Int. Cl.: G01N 17/00, A61L 27/50, A61L 31/14

(54) **VERFAHREN UND VORRICHTUNG ZUR UNTERSUCHUNG VON SLUDGEABLAGERUNGEN AUF MATERIALIEN FÜR ENDOPROTHESEN SOWIE ENDOPROTHESE**
METHOD AND DEVICE FOR INVESTIGATION OF SLUDGE DEPOSITS ON MATERIALS FOR ENDOPROSTHESES AND ENDOPROSTHESIS
PROCEDE ET DISPOSITIF SERVANT A RECHERCHER DES DEPOTS D'AGREGATS SUR DES MATIERES POUR ENDOPROTHESES ET ENDOPROTHESE

(30) Priorität: 18.05.2004 DE 102004025130
(43) Veröffentlichungstag der Anmeldung: 21.03.2007
(73) Patentinhaber: Universitätsklinikum Hamburg-Eppendorf Körperschaft des Öffentlichen Rechts, 20246 Hamburg (DE)
(72) Erfinder: SEITZ, Uwe, 22299 Hamburg (DE); WIENHOLD, Uwe, 39112 Magdeburg (DE); GROSSE, Carsten, 24635 Daldorf (DE)
(74) Vertreter: Garratt, Peter Douglas
(86) Internationale Anmeldenummer: PCT/DE2005/000912
(87) Internationale Veröffentlichungsnummer: WO 2005/111574

(56) Entgegenhaltungen:
- COSTAMAGNA G ET AL: "Hydrophilic hydromer-coated polyurethane stents versus uncoated stents in malignant biliary obstruction: a randomized trial." GASTROINTESTINAL ENDOSCOPY. JAN 2000, Bd. 51, Nr. 1, Januar 2000 (2000-01), Seiten 8-11, XP008053463 ISSN: 0016-5107
- COENE P P ET AL: "Clogging of biliary endoprostheses: a new perspective." GUT. AUG 1990, Bd. 31, Nr. 8, August 1990 (1990-08), Seiten 913-917, XP008053465 ISSN: 0017-5749
- HOFFMAN B J ET AL: "An in vitro comparison of biofilm formation on various biliary stent materials." GASTROINTESTINAL ENDOSCOPY. 1994 SEP-OCT, Bd. 40, Nr. 5, September 1994 (1994-09), Seiten 581-583, XP008053469 ISSN: 0016-5107
- BINMOELLER K F ET AL: "The Tannenbaum stent: a new plastic biliary stent without side holes." THE AMERICAN JOURNAL OF GASTROENTEROLOGY. OCT 1995, Bd. 90, Nr. 10, Oktober 1995 (1995-10), Seiten 1764-1768, XP008053464 ISSN: 0002-9270

## Beschreibung

Die Erfindung betrifft ein Verfahren zur Untersuchung von Sludgeablagerungen auf Materialien zur Beschichtung von Endoprothesen.

Die Erfindung betrifft darüber hinaus eine Vorrichtung zur Untersuchung von Materialien zur Beschichtung von Endoprothesen.

Ein gattungsgemäßes Verfahren wird von Hoffmann et al. (Gastrointestinal endoscopy, 40 (1994), 581-583) beschrieben.

Patienten mit fortgeschrittenem Pankreaskopfkarzinom haben eine geringe Lebenserwartung und leiden häufig aufgrund der Stenosierung der extrahepatischen Gallenwege an einer Cholestase mit daraus resultierendem massiven Juckreiz und der Gefahr einer sekundären Cholangitis.

Methode der Wahl bei der Palliativtherapie dieser Patienten ist das endoskopische Stenting des Gallengangs mit Kunststoffprothesen, um den Galleabfluß zu gewährleisten.

Das Problem des Verstopfens der Prothesen durch sogenannten "Sludge" aus Bakterien, Calciumbilirubinat u.a. nach einer Liegedauer von etwa 3-6 Monaten, konnte auch durch verschiedene Modifikationen (z.B. unterschiedliche Kunststoffe oder Beschichtungen, Zusatz von Antibiotika und Konstruktionsänderungen) bis heute nicht gelöst werden. Verstopfte Stents müssen gegen neue ausgewechselt werden.

Alternativ eingesetzte Metallstents kommen im klinischen Alltag aufgrund der etwa zwanzigfach höheren Materialkosten nur selten zum Einsatz.

Das Adenokarzinom des Pankreas stellt den viert- (Männer) bzw. fünfthäufigsten (Frauen) malignen Tumor dar und hat die niedrigste 5-Jahres-Überlebensrate aller Krebserkrankungen (1-5%). Die Inzidenz von Pankreastumoren nimmt in den westlichen Industriestaaten seit Jahren zu und erreicht derzeit 8-13 Fälle pro 100.000 Einwohner.

Das Erkrankungsrisiko nimmt mit dem fünfzigsten Lebensjahr deutlich zu. Die Diagnose wird meist in der Altersgruppe von 65 bis 80 Jahren gestellt.

Die extrem schlechte 5-Jahres-Überlebensrate ist durch Fehlen einer Früherkennungsmöglichkeit und damit späte Diagnosestellung verursacht, denn die meisten Patienten haben zum Zeitpunkt der Diagnose bereits einen fortgeschrittenen Tumor und Fernmetastasen (52%). Deshalb läßt sich die chirurgische Resektion in kurativer Absicht nur bei 14% der Patienten durchführen.

Bei Nachweis von Fernmetastasen sowie langstreckiger Gefäßinfiltration des Portalvenensystems, der Arteria mesenterica superior und der Arteria hepatica ist eine kurative Resektion unmöglich.

Daher kommt für diese Patienten, welche im klinischen Alltag die überwiegende Mehrheit bilden, nur ein palliatives Therapiekonzept in Frage.

In Abhängigkeit von den Beschwerden, stehen neben der Schmerztherapie und palliativen Chemotherapie die endoskopische Einlage von Stents in den Gallengang und in das Duodenum sowie chirurgische Maßnahmen (Gastroenterostomie, biliodigestive Anastomose) zur Auswahl.

Im Vergleich zu palliativen chirurgischen Maßnahmen haben die endoskopischen Verfahren eine geringere Morbidität, eine geringere Mortalität innerhalb von 30 Tagen und verursachen geringere Kosten. Gleichzeitig erlebt der Patient eine höhere Lebensqualität.

Daher werden endoskopische Interventionen zunehmend favorisiert, es sei denn, es liegt bereits bei Diagnosestellung eine signifikante Magenausgangsstenose durch Tumorinfiltration vor.

Das Verfahren der ersten Wahl bei tumorbedingtem Ikterus ist die Implantation einer biliären Endoprothese und wurde bereits 1979 eingeführt.

Heute gelingt dies mittels endoskopisch retrograder Cholangio- und Pankreatikographie (ERCP) und hoher Erfahrung des Operateurs bei über 95% der Patienten und ist bei fast allen Patienten mit einem Rückgang bzw. einer Normalisierung der extrahepatischen Cholestase und damit der Cholangitisgefahr verbunden.

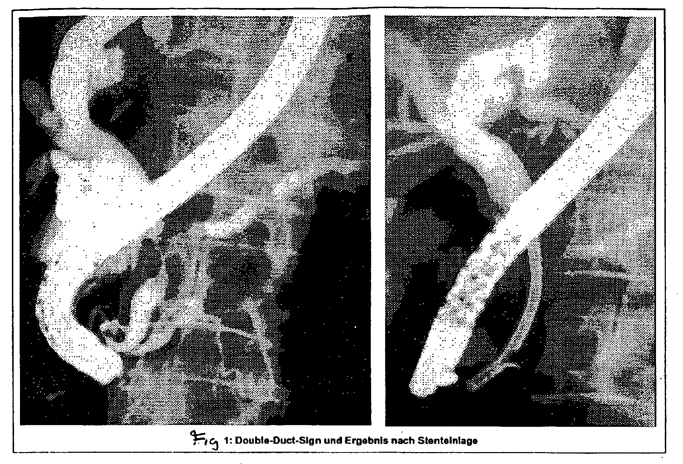

Fig. 1 zeigt das typische "Double-Duct-Sign" bei gestautem Pankreas- und Gallengang bei inoperablem Pankreaskopftumor sowie das Ergebnis nach endoskopischtranspapillärer Einführung einer Gallengangendoprothese.

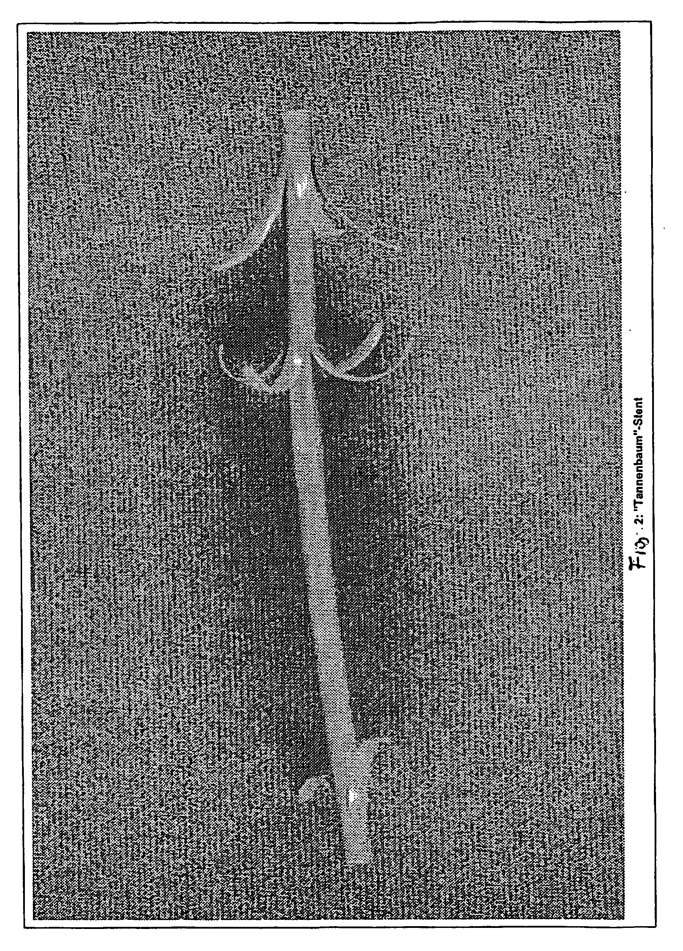

Die zur Zeit in der Klinik für interdisziplinäre Endoskopie im UKE überwiegend verwendeten Prothesen zur transpapillären Galleableitung sind sogenannte in Fig. 2 dargestellte "Tannenbaum"-Stents aus Teflon. Das bevorzugte Kaliber für eine dauerhaft gute Prothesenfunktion beträgt dabei erfahrungsgemäß 10-12 French (1 French = 1/3 mm).

Ein bekanntes und bis heute nicht endgültig gelöstes Problem ist das Verstopfen der Prothesen nach wenigen Monaten Liegedauer.

In seltenen Fällen sind auch Dislokationen in die Umgebung ursächlich für mangelnden Galleabfluß.

Die Patienten benötigen dann aufgrund des wiederkehrenden Ikterus bei ansteigenden Cholestaseparametern und der Gefahr einer sekundären Cholangitis einen Stentwechsel. Dieser ist seit der Einführung des "Stent-Retrievers" technisch einfach durchführbar, doch bedeutet auch eine ambulante Wiedervorstellung zur Reintervention eine Einschränkung der Lebensqualität des Patienten.

Nach der Einlage haften sich Proteine wie Fibronektin, Kollagen, Fibrin und Immunglobuline an die Oberfläche des Stentmaterials. Diese Proteine fördern die Anhaftung von Bakterien und die Bildung eines "Biofilms", bestehend aus Bakterien und bakteriell entstandenen Glykoproteinen.

Das bakterielle Enzym β-Glucuronidase, das vor allem von Escherichia coli produziert wird, dekonjugiert Bilirubin und fällt es als Salze aus.

Aus der Akkumulation von Bakterien, Glykoproteinen, Pflanzenfasern sowie Kristallen aus Calciumbilirubinat und Calciumfettsäuresalzen entsteht ein matschigsandiges, gelb-orange bis schwarz-braun gefärbtes Material, das als "Sludge" bezeichnet wird.

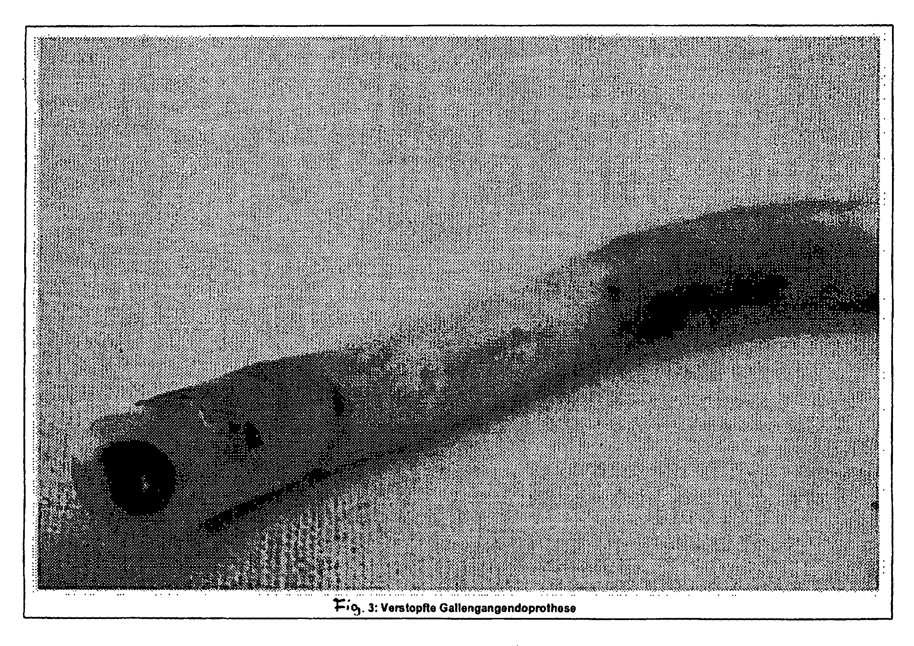

Fig. 3 zeigt einen verstopften Plastikstent, der aufgrund der insuffizienten Drainage entfernt werden mußte.

Mit verschiedenen Ansätzen wurde bisher versucht, das Problem des Verstopfens zu lösen.

Durch neue Endoskope mit größeren Arbeitskanälen wurde es möglich, Stents mit größeren Durchmessern zu legen. SPEER et al (Gastrointestinal endoscopy, 34 (1988), 412-417) beschrieben mit Prothesen bis zu einem Durchmesser von 10 French längere Liegezeiten erreichen zu können. Durch noch größere Durchmesser konnte jedoch keine weitere Verbesserung der Drainagedauer erreicht werden.

Da das von bakterieller β-Glucuronidase produzierte Bilirubinat quantitativ Hauptbestandteil des Sludge ist, wurde in mehreren randomisierten Studien versucht, durch prophylaktische antibiotische Maßnahmen die Sludgebildung einzuschränken.

Aber auch zusätzlich verabreichte Ursodesoxycholsäure oder Acetylsalicylsäure führten klinisch zu keiner feststellbaren Verbesserung der Drainageleistung.

LEUNG et al (Gastrointestinal endoscopy, 38 (1992), 338-340) konnten auch in-vitro keinen Vorteil von gallegängigen Antibiotika feststellen. Allerdings konnten sie in einem in-vitro-Versuch mit silberbeschichteten Stents eine Tendenz zu geringerer Sludgeablagerung nachweisen. Dieser Effekt zeigte klinisch jedoch keinen Vorteil.

Verschiedene Kunststoffe finden Verwendung bei der Herstellung von Gallengangprothesen.

Im klinischen Alltag der endoskopischen Abteilung im UKE Hamburg hat sich heute Teflon durchgesetzt.

Aufgrund des geringsten Reibungskoeffizienten aller Kunststoffmaterialien und damit einer sehr glatten Oberfläche sowie hydrophoben Eigenschaften konnte sowohl in-vitro als auch klinisch ein Vorteil festgestellt werden.

Verschiedene Kunststoffstents, die mit hydrophilen Polymeren beschichtet wurden, zeigten experimentell Hinweise auf geringere Sludgebildung und -ablagerungen. Dieser Effekt konnte aber in darauffolgenden in-vivo-Studien nicht bekräftigt werden.

Anstelle der 1979 im UKE Hamburg eingeführten ursprünglichen "Pigtail"-Prothese wird seit 1990 die "Tannenbaum"-Prothese verwendet. Sie hat eine gerade Form und keine Seitenlöcher. Zur Verankerung werden gemäß Fig. 1 drei Reihen mit je vier Öhrchen in die Prothesenwand geschnitten, ohne sie zu perforieren. Durch den Verzicht auf die Seitenlöcher konnte eine geringere Verstopfungsrate festgestellt werden. Ebenso konnte hierdurch eine Verringerung der Reinterventionen erreicht werden.

Eine Alternative stellen biliäre Metallstents dar, die als selbstexpandierende "Wallstent" oder ballonexpandierende "Strecker-Stent" sowie als "Endocoil-Stent" kommerziell erhältlich sind.

Am häufigsten wird bisher der "Wallstent" verwendet. Der maximale Prothesendurchmesser beträgt 1 cm, die Prothesenanlage ist zumeist technisch nicht schwierig. Problematisch ist aber, daß die Metallstents hohe Kosten verursachen (etwa 1500 Euro), ohne dabei die Überlebenszeit gegenüber Kunststoffprothesen signifikant zu steigern, obgleich die Okklusionsrate deutlich niedriger liegt (33% mit Metall gegenüber 54% bei Kunststoff). Die Langzeitdrainage wird durch Tumoreinwuchs in die Prothese beeinträchtigt

Die weiterentwickelten beschichteten Metallstents erlauben durch ihre Silikon- oder Polyurethenoberfläche eine längere Drainagezeit.

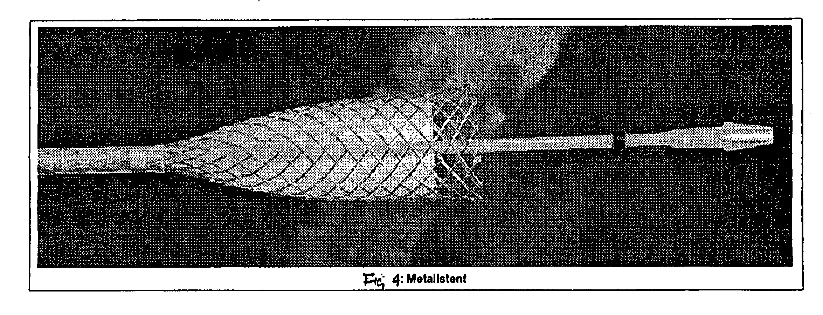

Da ein Metallstent nicht mehr entfernt werden kann, muß diese Spätkomplikation individuell abgestimmt durch Einlegen einer Kunststoffprothese durch den Metallstent, einen zweiten Metallstent, aber auch thermische Verfahren therapiert werden. In Fig. 4 ist ein handelsüblicher Metallstent abgebildet.

In Zeiten knapper Budgets ist der Einsatz von Metallendoprothesen problematisch.

Bei einer Untergruppe von Patienten in gutem Allgemeinzustand, Fehlen von Fernmetastasen und einer voraussichtlichen Überlebenszeit von mehr als 6 Monaten ist ihr frühzeitige Einsatz aber hinsichtlich der Lebensqualität und der Kosten von Vorteil.

Für Gallengangprothesen sind auch bereits Nano-Beschichtungen bekannt geworden. "Nano" ist abgeleitet vom griechischen Wort für Zwerg und beschreibt das Vordringen in geringe Dimensionen auf der Skala Nanometer (nm), einem millionstel Millimeter.

Die Nanotechnologie beschäftigt sich mit Systemen, deren Funktionen und Eigenschaften durch ihre winzigen räumlichen Strukturen bestimmt sind. Typisch ist eine Ausdehnung von weniger als 100 nm. Komponenten der Nanotechnologie bestehen damit nur aus wenigen Atomen oder Molekülen.

Die Nanopartikel weisen deutlich geänderte Eigenschaften in ihrem Verhalten gegenüber größeren Festkörpern auf, da sie ein sehr großes Verhältnis von Volumen zu Oberfläche im Vergleich zu größeren Partikeln besitzen. Damit sind trotz gleicher chemischer Basis drastische Eigenschaftsänderungen möglich.

Als eine sehr innovative Entwicklungsrichtung auf dem Gebiet der Nanotechnologie haben sich die anorganisch-organischen Beschichtungsmaterialien auf Sol-Gel-Basis erwiesen. Diese Materialien zeichnen sich durch eine ausserordentliche Variationsbreite ihrer Eigenschaften aus, deren Zusammensetzung und Homogenität im molekularen Bereich kontrolliert werden kann. Sie stellen dabei die konsequente Anwendung bekannter chemischer Syntheseprinzipien zur Entwicklung neuer Werkstoffmaterialien dar.

Als Beispiel können glatte Oberflächen so verändert werden, dass Schmutz oder Wasser darauf keinen Halt mehr finden.

Einige der aus dem Sol-Gel-Prozess hervorgegangenen neuen Materialien werden bereits industriell genutzt, z. B. als kratzfester Autolack und schmutzabweisende Fassadenfarbe.

Im Folgenden wird die grundlegende Technik der Synthese von Sol-Gel-Beschichtungsmaterialien erläutert.

Als Ausgangsmaterialien im technischen Sol-Gel-Prozess werden hydrolysierbare anorganische Verbindungen eingesetzt. Die grösste Bedeutung besitzen hierbei Alkoxyverbindungen verschiedener Elemente.

Das Grundprinzip soll gem. Formel 1 am Beispiel einer Alkoxyverbindung des Siliciums (Kieselsäureester) erklärt werden.

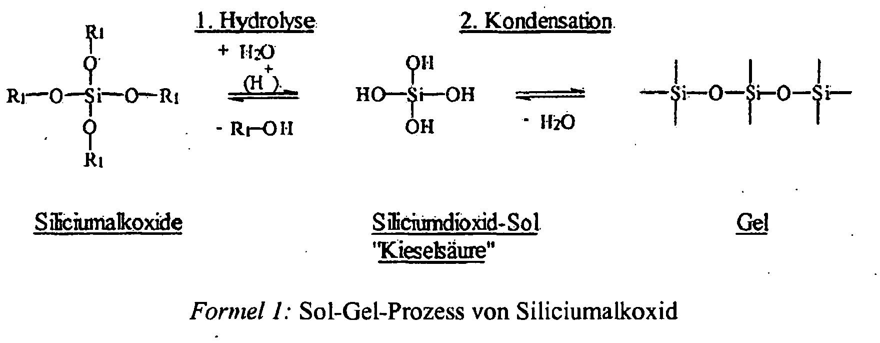

### Grundstruktur dieses Siliciumesters : Si(OR)₄

OR steht hier für hydrolysierbare Gruppen, die während der Reaktion als Alkohole abgespalten werden.

Alkoxide des Siliciums werden im allgemeinen auch als Silane bezeichnet.

Im ersten Reaktionsschritt werden Silanverbindungen hydrolysiert. Dabei erfolgt teilweise Bildung von reaktiven Silanolen (Si-OH), bei denen Alkoholreste am Silicium durch OH-Gruppen ersetzt werden. Die gebildeten Alkohole verbleiben in der Regel im Sol.

Die Hydrolyse führt zum reaktiven Zwischenprodukt, dem Sol, das aus kolloidalen Teilchen besteht. Es ist eine dünnflüssige und farblose Flüssigkeit, die als Beschichtungsstoff fungieren kann.

In diesem Stadium werden in der kolloidalen Lösung die reaktiven monomeren und oligomeren Vorstufen für eine spätere Vernetzungsreaktion erzeugt, die die Größe von wenigen Nanometern besitzen.

In einem zweiten Reaktionsschritt, einer Kondensationsreaktion wird das Sol zu Polysiloxanen umgesetzt (Gelzustand). Dies passiert entweder bei Raumtemperatur oder unter Zuführung thermischer Energie. Es entstehen anorganische oxidische Polymerstrukturen, ein filigranes Netzwerk aus Nanopartikeln.

Diese Strukturen besitzen für anorganische Materialien typische Eigenschaften, wie große Härte, aber auch Sprödigkeit und Porösität.

Mit organisch modifizierten Komponenten, die in den Sol-Gel-Prozess integriert werden, ist es nun möglich, Materialien herzustellen, die nicht porös und flexibler sind als die rein anorganische Polymere.

Zur Verbindung der anorganischen und organischen Polymere kann man verschiedene organisch modifizierte Alkoxide einsetzen, z. B. Organosilane mit einer oder mehreren organischen Gruppen anstelle von Alkoxyfunktionen.

Die dann am anorganischen Netzwerk verankerten organischen Gruppen verleihen dem Kompositmaterial steuerbare Eigenschaften.

Daraus ergibt sich folgende Grundstruktur: (OR)₃Si-R₁
(R₁= Alkylrest, funktionelle Gruppe)

Tabelle lA zeigt in Bezug auf Formel 2 den Einfluss verschiedener organisch/anorganischer Strukturelemente auf die Eigenschaften der hybriden Materialien.

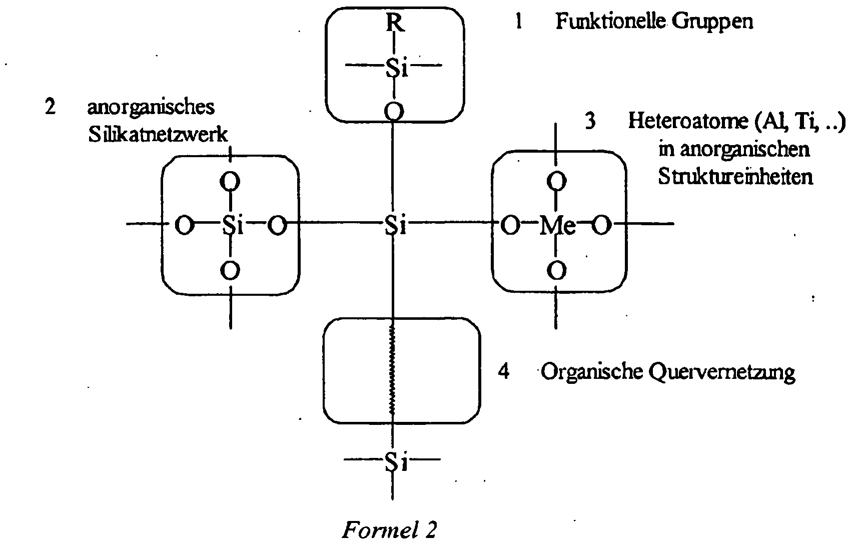

### Einfluß der Strukturelemente auf verschiedene Eigenschaften:

**Tabelle 1A: Einfluss organisch/anorganischer Strukturelemente auf die Eigenschaften hybrider Polymere**

| | | | | |
|---|---|---|---|---|
| * Härte, Elastizität Dichte, Porosität | 1 | 2 | 3 | 4 |
| * thermische Ausdehnung | | 2 | 3 | 4 |
| * Polarität, hydrophil/hydrophob | 1 | | | 4 |
| * Strukturierbarkeit | | | | 4 |
| * Brechzahl | 1 | | 3 | |
| * Sensitivität | 1 | | | 4 |
| * Barrierewirkung | 1 | 2 | | 4 |

Durch Hydrophobierung der Sol-Gel-Matrix und daraus Ausbildung einer Niedrigenergieoberfläche, kann u.a. eine schmutz- und wasserabweisende Beschichtung erreicht werden.

Je höher der anorganische Anteil, umso spröder und härter sind die resultierenden Schichten. Je höher der organische Anteil bei der Netzwerkbildung, umso höher ist die Flexibilität und die Dichtigkeit.

Die Applikation auf Oberflächen ist mit den in der Lacktechnik üblichen Verfahren wie Sprühen, Tauchen, Fluten, Schleudern etc. möglich.

Die anorganisch-organischen Hybridpolymere sind gegenüber den meisten organischen Lösungsmitteln resistent.

Angreifbar sind die Schichten lediglich durch sehr starke Alkalien, z. B. Natronlauge.

Da die Herstellung der oben beschriebenen "klassischen" hybriden Sol-Gel-Materialien noch sehr preisintensiv ist, hat das *Institut für Lacke und Farben e. V. Magdeburg* ein Alternativkonzept zur Herstellung von hybriden Sol-Gel-Beschichtungen unter Verwendung von Bindemitteln entwickelt.

Als organische Modifizierungskomponente werden rein organische Polymere eingesetzt, die sich durch einen deutlich reduzierten Herstellungspreis bei gleichbleibenden Verarbeitungseigenschaften auszeichnen.

In einem Zweistufenprozeß werden die organischen Polymere (Bindemittel) unter Verwendung von selektiv reagierenden bifunktionellen Kopplungssubstanzen funktionalisiert.

Danach knüpft die anorganische Sol-Komponente an die noch verbleibende reaktive Gruppe der Kopplungssubstanz am Polymer an. Zusätzlich wird eine Hydrophobierungssubstanz beigesetzt.

Durch den Einsatz von organischen Polymeren im Sol-Gel-Prozess konnte gezeigt werden, daß eine ähnlich definierte und gezielte Beeinflussung des Eigenschaftsbildes von Beschichtungsmaterialien erreicht werden kann, wie durch die Nutzung von organisch substituierten Silanen.

Aufgabe der vorliegenden Erfindung ist es, ein Verfahren der einleitend genannten Art derart anzugeben, daß ein einfacher in-vitro-Versuchsaufbau zur Untersuchung von Biofilmbildung auf Endoprothesen bereitgestellt wird.

Diese Aufgabe wird erfindungsgemäss dadurch gelöst, dass mindestens eine beschichtete Endoprothese in mindestens einem Inkubationsgefäss positioniert wird und dass das Inkubationsgefäss mindestens teilweise mit infizierter Galle gefüllt wird, sowie dass mindestens ein mit einer zu untersuchenden Endoprothese versehenes Inkubationsgefäss langsam durch hin- und herkippen hin und hergeschwenkt wird, sowie dass ein Teil der Gallenflüssigkeit regelmässig ausgetauscht wird.

Weitere Aufgabe der vorliegenden Erfindung ist es, eine Vorrichtung der einleitend genannten Art derart zu konstruieren, dass eine preiswerte und qualitativ hochwertige in-vitro-Untersuchung von beschichteten Endoprothesen durchgeführt werden kann.

Diese Aufgabe wird erfindungsgemäss dadurch gelöst, dass ein Schwenktisch zur Positionierung von Proben verschwenkbar relativ zu einer Drehachse angeordnet ist und dass zur Aufnahme der Proben auf dem Schwenktisch mindestens ein mindestens bereichsweise mit Galle gefülltes Inkubationsgefäss angeordnet ist.

Eine hohe Aussagegüte kann dadurch erreicht werden, daß die Gallengangprothesen etwa 35 Tage innerhalb des Inkubationsgefäßes auf dem Schwenktisch hin- und hergeschwenkt werden.

Eine gute Umströmung der Prothese mit Galle bei gleichzeitiger Minimierung ungünstiger Bewegungseinflüsse kann dadurch erfolgen, daß etwa 10 Schwenkvorgänge pro Minute durchgeführt werden.

Zur Anpassung der Versuchsbedingungen an reale Einsatzbedingungen nach einer Implantation der Prothese wird vorgeschlagen, daß innerhalb des Inkubationsgefäßes eine Temperatur von etwa 37 °C aufrecherhalten wird.

Eine weitgehende Annäherung der Versuchsbedingungen an reale Einflußparameter erfolgt dadurch, daß die Probe als eine beschichtete Gallengangprothese ausgebildet ist.

Ein preiswerter und zugleich robuster und zuverlässiger Versuchsaufbau wird dadurch bereitgestellt, daß der Schwenktisch über ein Getriebe mit einem Motor gekoppelt ist.

Zur Ermöglichung einer Einstellbarkeit der Schwenkbewegung wird vorgeschlagen, daß eine Drehzahl des Motors einstellbar ist.

Insbesondere ist daran gedacht, daß der Motor mit dem Schwenktisch über eine Kopplungseinrichtung zur Vorgabe eines langsamen Hin- und Herschwenkens verbunden ist.

Für die Untersuchung der Gallengangprothesen wird eine Apparatur bereitgestellt, die mit geringer Frequenz und einem Neigungswinkel von maximal 40° schwenkt, um ein Überkippen des flüssigen Inkubationsmediums zu vermeiden. Zusätzlich ist die Apparatur so platz- und stromsparend wie möglich sein, um den Versuch bei 37 °C in einem Bakterieninkubator durchzuführen. Es erfolgt ein langsames Hin- und Herschwenken, um ähnliche Biofilmentstehung wie unter in-vivo-Bedingungen zu erreichen.

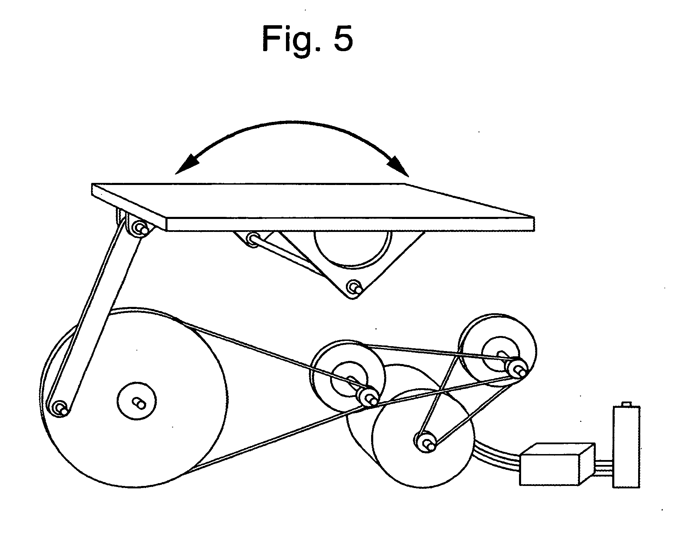

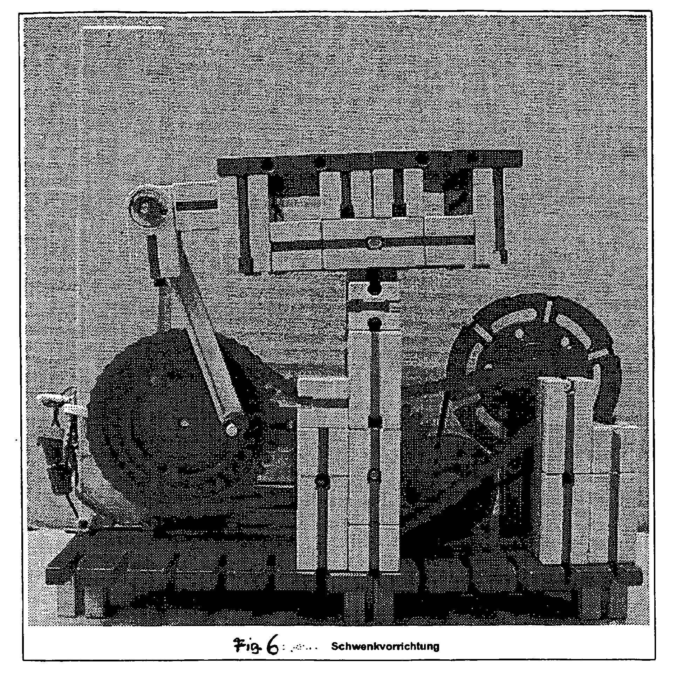

Gemäß der Ausführungsform in Fig. 5 und Fig. 6 ist auf einer Grundplatte ein Schwenktisch mit einer Achse montiert. Als Antrieb dient ein Kassettenrekorder-Motor mit relativ hoher Umdrehungszahl. Mit Hilfe von drei Zahnrädern als Übersetzung wird diese hohe Zahl grob auf unter 10 Umdrehungen pro Minute heruntergeteilt. Mit einem Standard-Potentiometer, welches als einstellbarer Spannungsteiler fungiert, kann die Anzahl der Umdrehungen der Tischachse zusätzlich feinreguliert werden. Die gesamte Apparatur benötigt eine Spannung von 4,5 Volt, die von drei Babyzellen Typ C à 1,5 Volt geliefert wird. Die Vorrichtung hat eine Grundfläche von 18 x 9 cm bei einer Gesamthöhe von 18 cm.

Die während der gesamten Versuchsdauer häufig verwendeten Materialen sowie ihre Bezugsquellen sind in Tabelle 1 aufgelistet.

| **Geräte:** | | | |
|---|---|---|---|
| Zentrifuge | | Type: 5804R | Fa. Eppendorf |
| | | Rotor: F 34-6-36 (6 x 85 ml) | |
| Wasserbad | | Thermomix BU | Fa. Braun |
| Gefrierschrank -21 °C | | comfort | Fa. Liebherr |
| Gefrierschrank -80 °C | | | Fa. Kryotec |
| Inkubator | | Type: 2771 | Fa. Köttermann |
| Schüttler | | Type: 3005 | Fa. GFL |
| Autoklav | | Sanoclav | Fa. Wolf |
| Sputter-Gerät | | SEM-Coating System | Fa. Bio-Rad |
| Elektronenmikroskop | | | |
| **Chemikalien**: | | | |
| NaCl | | | Fa. J. T. Baker |
| Trypton-Wasser | | #1.10859.500 | Fa. Merck |
| Hefeextrakt | | #1.03753.500 | Fa. Merck |
| LB-Agar (Lennox L Agar) | | #22700-025 | Fa. Invitrogen |
| Glutaraldehydlösung | | #1.04239.1000 | Fa. Merck |
| Phosphatpuffer (PBS) | | | |
| Ampicillinpulver | | #835269 | Fa. Roche |
| Glycerin | | #1.04093.1000 | Fa. Merck |
| **Verbrauchsgegenstände:** | | | |
| Batterien | | Procell 1.5V Size C | Fa. Duracell |
| Pipettenspi | 1000 blau | #740296 | Fa. Greiner |
| tzen | 200 gelb | #739296 | |
| Zellkulturplatten | | #150628 | Fa. Nunc |
| (12-well-plate) | | | |
| Zellkulturplatten | | #662102 | Fa. Greiner |
| (24-well-plate) | | | |
| Petrischalen | | #663102 | Fa. Greiner |
| 50 ml - Falcon-Tubes | | #2070 | Fa. Bacton |
| | | | Dickinson |
| 1,5 ml - Tubes | | #616201 | Fa. Greiner |
| Faltenfilter | 150 mm | #10312245 | Fa. |
| | | | Schleicher&Schuel |
| | | | 1 |
| Blutbeutel | 500 ml | #P4162 | Fa. Fresenius |
| Compoflex^{®} | 150 ml | #P4158 | Hemo Care |
| **Tabelle 1: Verwendete Geräte, Chemikalien und Verbrauchsgegenstände** | | | |

Nachfolgend wird das zur Versuchsdurchführung verwendete biologische Material erläutert. In einem Sammelzeitraum von insgesamt 10 Wochen wurden in etwa 1,5 Liter humane Galle gesammelt. Zur Sammelgruppe gehörten 12 weibliche und 6 männliche Patienten zwischen 42 und 82 Jahren. Alle Patienten benötigten aufgrund gut- oder bösartiger hepatobiliärer Erkrankungen interventionelle endoskopische Eingriffe oder mussten sich einer chirurgischen Therapie unterziehen. Für die Entnahme der Galle entstand also kein zusätzlicher Aufwand für die Patienten.

Jeder Patient wurde vor der Entnahme über das Vorgehen, sowie den Verwendungszweck der Galle aufgeklärt.

Anamnestisch wurde sichergestellt, dass die Patienten in einem Zeitraum von einer Woche vor der Entnahme keine Antibiotikatherapie erhalten hatten.

In Klinik für interdisziplinäre Endoskopie des UKE wurde stationären sowie auch ambulanten Patienten während einer ERCP 4-15 ml Galle über den Arbeitskanal des Duodenoskops entnommen, in sterilen Einmalspritzen aufbewahrt und bis zur weiteren Verarbeitung bei -21 °C tiefgefroren.

Stationären Patienten der Chirurgischen Abteilung des UKE wurde aus einer postoperativen T-Drainage 25-65 ml Galle entnommen, in sterilen Falcon-Tubes abgefüllt und ebenfalls bei -21 °C aufbewahrt.

Der Hauptanteil der gesammelten Galle stammt von stationären Patienten der Abteilung für Endoskopie des Allgemeinen Krankenhauses Barmbek (AKB).

Hier wurde von zwei Patienten aus einer postoperativen T-Drainage insgesamt ungefähr 950 ml Galle entnommen. Die Entnahme und Aufbewahrung erfolgte wie oben beschrieben.

Dabei erfolgte eine getrennte Aufbewahrung und Kennzeichnung der Galle jedes einzelnen Patienten an jedem Entnahmetag.

Tabelle 2 zeigt alle Patienten mit ihren Diagnosen chronologisch nach dem Entnahmedatum aufgelistet. Ebenfalls ist hier das Geschlecht, das Alter, die Entnahmeart und -menge erkenntlich, sowie die jeweilige Klinik.

Für diese Studie wurde ein Galle-Pool von mindestens einem Liter Menge benötigt.

Die Galle sollte möglichst kein Antibiotikum enthalten, sowie annähernd keim- bzw. zellfrei sein.

Die gesammelte Galle wurde zur weiteren Verarbeitung portionsweise zu je 50 ml in Falcon-Tubes gefüllt.

Zwischen allen Verarbeitungsschritten wurde die Galle immer bei -21 °C gelagert, um eine Überwucherung mit Bakterien zu verhindern.

Mit jeder Galleprobe wurde ein Hemmstofftest zum Nachweis von Antibiotika durchgeführt.

| **Pat.** | **Geschl.** | **Alter** | **Diagnose** | **Entnahme art** | **Menge** | **Datum** | **Klinik** |
|---|---|---|---|---|---|---|---|
| | | | | | | | |
| 1 | f | 84 Jahre | Pankreaskopf-Karzinom | T-Drainage | 25 ml | 25.07.02 | UKE |
| 2 | f | 66 Jahre | Pankreaskopf-Karzinom | T-Drainage | 50 ml | 25.07.02 | UKE |
| 3 | f | 84 Jahre | Choledocholithiasis, Cholangitis, Pankreatitis | ERCP | 15 ml | 27.07.02 | UKE |
| 4 | m | 42 Jahre | duodenumerh. Pank.kopf.res. bei chron. Pankreatitis | T-Drainage | 65 ml | 20.08.02 | UKE |
| 5 | f | 77 Jahre | Choledocholithiasis bei BII-Magen und bil. Pankreatitis | ERCP | 6 ml | 20.08.02 | UKE |
| 6 | f | 75 Jahre | Sickerblutung nach Papillotomie bei Pankreatitis und Steinen | ERCP | 6 ml | 26.08.02 | UKE |
| 7 | f | 66 Jahre | Cholestase bei Choledocholithiasis | ERCP | 5 ml | 26.08.02 | UKE |
| 8 | m | 72 Jahre | Stentwechsel bei Klatskin-Tumor | ERCP | 10 ml | 27.08.02 | UKE |
| 9 | m | 67 Jahre | Stentwechsel | ERCP | 5 ml | 09.09.02 | UKE |
| 10 | f | 50 Jahre | Choledocholithiasis | ERCP | 6 ml | 10.09.02 | UKE |
| 11 | m | 66 Jahre | Adenom Pankreasgang, chron. rez. Pankreatitis | ERCP | 10 ml | 09.09.02 | UKE |
| 12 | f | 52 Jahre | Gallengangstriktur | ERCP | 5 ml | 16.09.02 | UKE |
| 13 | f | 77 Jahre | Choledocholithiasis | ERCP | 5 ml | 19.09.02 | UKE |
| 14 | f | 82 Jahre | Gallenblasen-Karzinom | ERCP | 5 ml | 20.09.02 | UKE |
| 15 | f | 62 Jahre | Gallenkolik bei Cholezystolithiasis | ERCP | 4 ml | 24.09.02 | UKE |
| 16 | f | 67 Jahre | Cholestase | ERCP | 15 ml | 26.09.02 | UKE |
| 17 | m | 51Jahre | biliäre Peritonitis bei Z. n. Gastroenterostomie wg. Pankreaskopf-Karzinom | T-Drainage | 500 ml | 09.10.02 | AKB |
| 18 | m | 52 Jahre | Cholezystektomie wg. Cholezystolithiasis bei PSC | T-Drainage | 150 ml 350 ml | 10.10.02 11.10.02 | AKB |
| **Tabelle 2: Patienten und Diagnosen** | | | | | | | |

| | | | | | | | |
|---|---|---|---|---|---|---|---|
| AKB = Allgemeines Krankenhaus Barmbek, Hamburg UKE = Universitätsklinikum Eppendorf, Hamburg | | | | | | | |

Dazu wurde je ein Tropfen Galle auf ein Filterplättchen in einer mit Bacteroides fragilis (nichtsporenbildendes Stäbchenbakterium, obligat anaerob, gramnegativ) beimpften Agaroseplatte aufgebracht und über Nacht bei 37 °C inkubiert.

Enthielt eine Probe ein Antibiotikum, konnte das anhand des entstandenen Hemmhofs um das Filterpapier erkannt werden. Nur bei zwei Patienten konnte ein Antibiotikum nachgewiesen werden, diese Galle wurde dann verworfen.

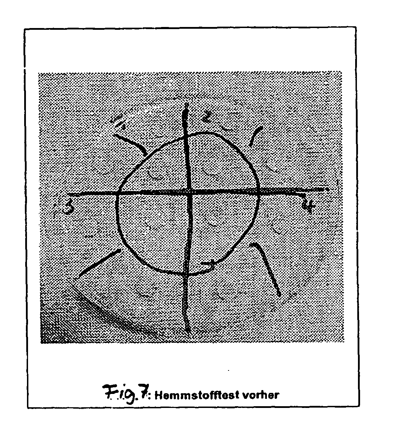

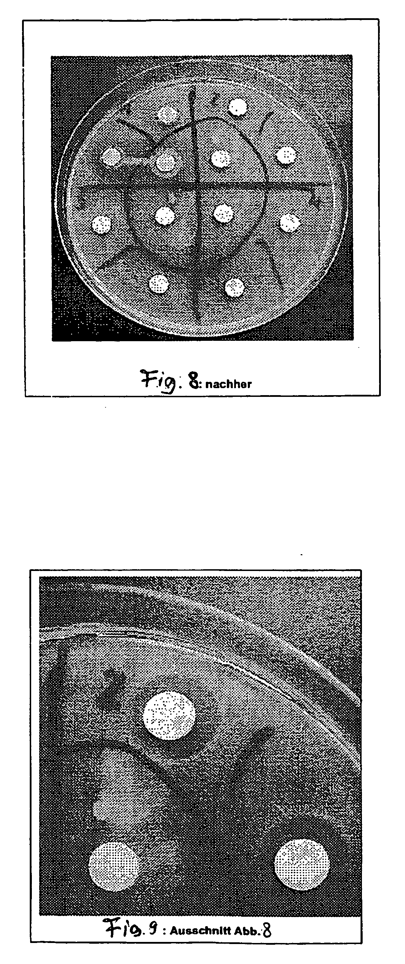

Die Fig. 7 und 8 verdeutlichen das Prinzip des Hemmstofftests.

In Fig. 9 ist deutlich der Hemmhof einer Antibiotikapositiven Probe zu erkennen.

Danach wurde aus allen übrigen Proben ein Galle-Pool hergestellt.

In einem ersten Schritt wurde durch Zentrifugieren versucht alle großen Zellen, Keime und kristalline Präzipitate zu entfernen. Hierfür wurde jede Probe in einer Tischzentrifuge 20 Minuten lang bei 8.000 Umdrehungen pro Minute zentrifugiert.

Die Pellets wurden jeweils verworfen. Die Überstande wurden in einem Glaskolben gesammelt und dann zweimal durch einen Papierfilter gegossen, um mögliche Zellen, die durch das Zentrifugieren nicht extrahiert werden konnten herauszufiltern.

Das Filtrat wurde in einem weiteren Glaskolben aufgefangen und in zwei Einfach-Blutbeutel umgefüllt.

Im *Institut für Transfusionsmedizin des UKE* wurde der Pool unter Anleitung von *Frau Dr. Lubitz und Mitarbeitern* in einem Blutbestrahlungsgerät der Firma Hans Wällischmiller GmbH vom Typ HWM 400D neun Minuten lang mit 30 Gray bestrahlt.

Mit der Bestrahlung sollte eine völlige Keimfreiheit des Galle-Pools sichergestellt werden.

An einer sterilen Werkbank wurde die Keimfreiheit durch mehrere Ausstriche auf Agarose-Platten mit jeweils drei Tagen Inkubationsdauer verifiziert.

Bis zur Verwendung wurde der Galle-Pool erneut in sterilen Tubes zu je 50 ml bei -21 °C aufbewahrt.

Für die Untersuchung der Biofilmentstehung auf Gallengangstents wurde ein Keim mit potentieller β-Glucoronidase-Aktivität benötigt.

Zusätzlich zu den rasterelektronenmikroskopischen Analysen der Biofilmentwicklung auf den verschiedenen Beschichtungen sollten Untersuchungen mit einem Fluoreszenzmikroskop angefertigt werden.

Ein Standard-Stamm von E. coli (DH5α), der mit einem Vektor der Firma Clontech (pDsRed2; Katalog # 6943-1) transformiert wurde erfüllte diese beiden Voraussetzungen und wurde in allen Versuchen verwendet.

Das Plasmid pDsRed2 enthält eine Origin-Sequenz für die Vermehrung in Bakterien, ein Ampicillin-Resistenz-Gen, sowie das DsRed2-Gen, für ein rot-fluoreszierendes Protein (RFP) 2.Generation (Weiterentwicklung des DsRed1) der Gattung Discosoma.

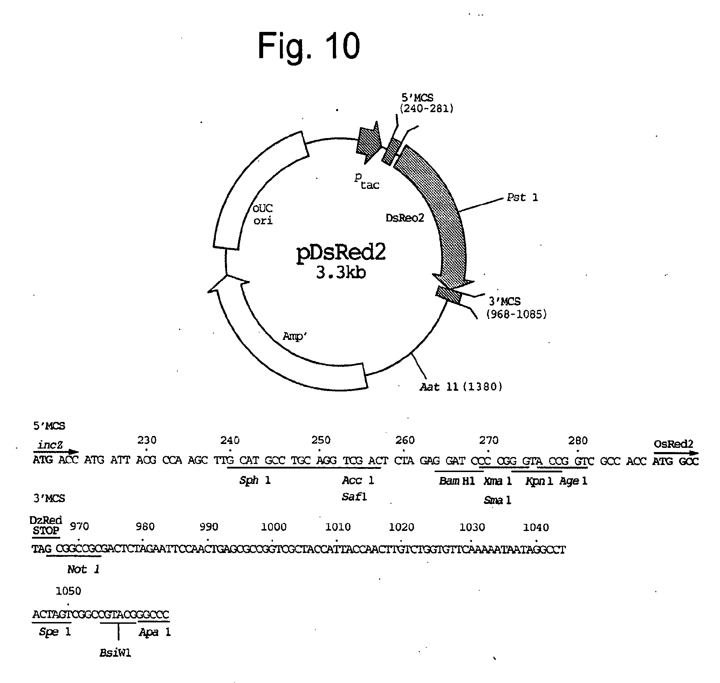

Fig. 10 zeigt die Plasmidkarte, sowie die Multiple Cloning Site von pDsRed2.

Die bakterielle β-Glucoronidase-Aktivität wurde in einer Untersuchung des *Mikrobiologischen Instituts des UKE* gesichert. Zum Nachweis diente ID 32 E ein Identifizierungssystem für Enterobakterien der Firma bioMérieux.

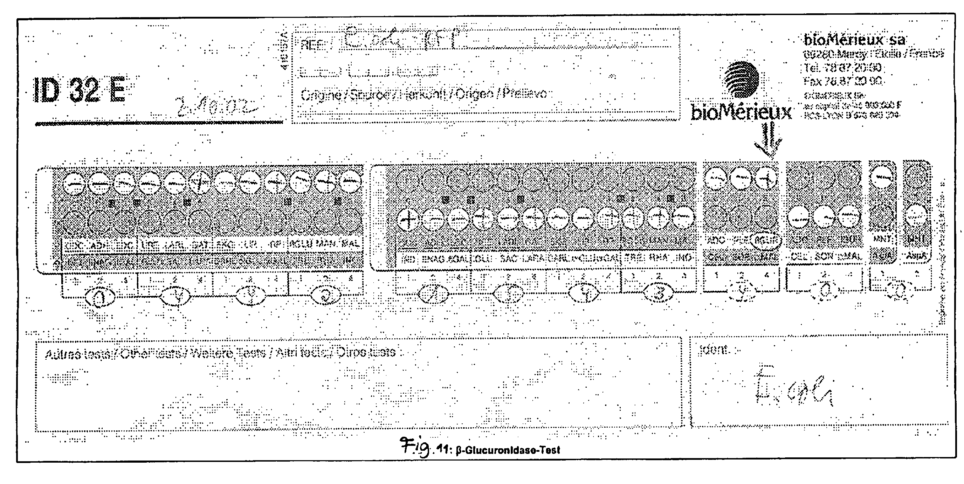

In Fig. 11 ist die Identifizierung des Keims auf der Ablesetabelle dargestellt. Die β-Glucoronidase-Aktivität ist mit einem roten Pfeil markiert.

Auf Agar wurde eine Reinkultur des Keimes hergestellt und mit einer Pipettenspitze eine etwa stecknadelkopfgroße Menge mit einem handelsüblichen Phosphatpuffer vermischt.

Diese Suspension wurde auf einem Objektträger ausgestrichen und zum Nachweis der Fluoreszenz mit dem Fluoreszenzmikroskop betrachtet.

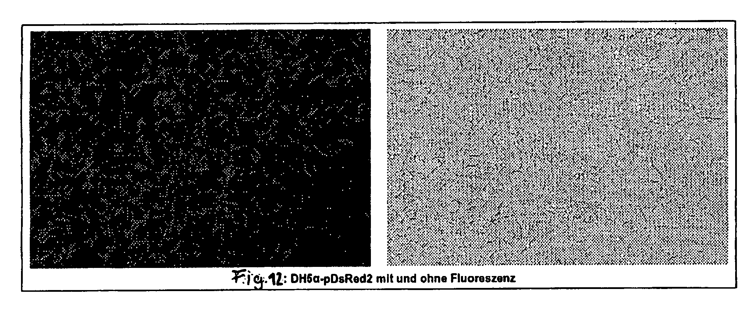

Fig. 12 zeigt ein Bild von DH5α-pDsRed2 mit und ohne Anregung der Fluoreszenz.

Um eine definierte Keimmenge pro Milliliter zu erhalten wurde zunächst eine Bakteriensuspension wie folgt hergestellt:
- LB-Medium:: 1 g NaCl, 1 g Typton-Wasser und 0,5 g Hefe-Extrakt wurden mit destilliertem Wasser zu 100 ml aufgefüllt und 15 Minuten lang bei 121 °C und 1,5 bar autoklaviert.
- Ampicillin- Lösung:: 1 g Ampicillin-Pulver wurde in 10 ml destilliertem Wasser gelöst, die Lösung durch Steril-Filter mit 0,22 µm Porengröße gegeben und in Portionen zu 1 ml in Eppendorf-Tubes bei -21 °C eingefroren.

Von der Ampicillin-Lösung wurde 100 µl zu 100 ml flüssigem LB-Medium zugegeben.

Dabei entstand eine Endkonzentration von 100 µg Ampicillin / ml Medium.

In diese Flüssigkultur wurde mit Hilfe einer Pipettenspitze eine stecknadelkopfgroße Menge tiefgefrorener Bakterien übertragen. Die Suspension wurde dann über Nacht bei 37 °C und 100 upm im Schüttler inkubiert.

Am nächsten Tag wurde jeweils 1 ml der Bakteriensuspension zusammen mit 250 µl Glycerin zum Schutz der Keime in Eppendorf-Tubes eingefüllt und bei -80 °C gelagert.

Aus dieser Bakteriensuspension wurde eine serielle Verdünnungsreihe in logarithmischen Schritten bis zur 8. Potenz hergestellt, um hieraus später die Anzahl der Keime pro Milliliter bestimmen zu können.
- Agarose- Platten:: 32 g Lennox L Agar der Firma Invitrogen wurden mit
1 1 destilliertem Wasser gemischt und autoklaviert,
das noch heiße, flüssige Medium wurde zügig in Petrischalen gegossen und fest werden gelassen.
Für Ampicillin-Agarose-Platten wurde zu der auf Handwärme abgekühlten Agarose 1 ml Ampicillinlösung zugegeben und die Mischung dann ausgegossen.

Von jeder Verdünnung wurden 50 µl mit einem Glasspatel auf Agarose-Platten ausgestrichen, die dann über Nacht bei 37 °C inkubiert wurden.

Die entstandenen Kolonien von zwei Platten wurden manuell ausgezählt und aus den Ergebnissen eine mittlere Keimanzahl von 80 x 10⁶ Keimen / ml festgestellt.

Jedes eingefrorene Tube mit 1 ml Bakteriensuspension enthielt also annähernd 80 Millionen Keime. Für die Verwendung der Bakterien konnten die Tubes dann einzeln aufgetaut werden.

Bei der Versuchsdurchführung wurden 7 unterschiedliche Oberflächenmaterialien sowie zum Vergleich unbeschichtete Gallengangstents aus Teflon untersucht.

Das Stentmaterial aus Teflon mit einem Durchmesser von 12 French wurde von Herrn Hans-Christian Grosse - Medizintechnik/Arzt- und Krankenhausbedarf - zur Verfügung gestellt, ebenso das Rohmaterial aus Teflon für die neuen Beschichtungen.

Das neue Beschichtungskonzept wurde vom *Institut für Lacke und Farben e. V. Magdeburg (iLF; Dr. Uwe Wienhold)* entwickelt und auf fertige Prothesen aus Teflon aufgebracht.

Bei allen Produkten handelte es sich um hydrophobierte organisch-anorganische Beschichtungsmaterialien.

Folgende Herstellungsweise wurde dabei angewendet:
1.) Funktionalisierung der Bindemittel (organisches Polymer) unter Verwendung von selektiv reagierenden bifun tionellen Kopplungssubstanzen
2.) Umsetzung der noch verbleibenden reaktiven Gruppe der Kopplungssubstanz am Polymer mit anorganischen Sol-Komponenten und Hydrophobierungssubstanz

Im folgenden wird die Codierung der getesteten Materialien beschrieben.
**Beschichtung 1: EP19AE/VI-F88/2**
**Beschichtung 2: EP50AE/VI-F88/2**
**Beschichtung 3: EP19AE/VI-F26/2**
**Beschichtung 4: EP50AE/VI-F26/2**
**Beschichtung 5: EP19AE/VI**
**Beschichtung 6: EP50AE/VI**
**Beschichtung 7: Clearcoat U-111**

Erläuterungen zu den einzelnen Beschichtungen:
- **EP19:**: ist ein niedermolekulares Epoxidharz (190 Mol)
mit einem Verhältnis der organischen hydrophoben Anteile zu den anorganischen hydrophilen Anteilen von ~ 50:50
- **EP50:**: ist ein hochmolekulares Epoxidharz (500 Mol)
mit einem Verhältnis der organischen hydrophoben Anteile zu den anorganischen hydrophilen Anteilen von ~ 75:25
- **AE:**: ist eine Kopplungssubstanz (Aminoetoxysilan)
- **F88 bzw.**: sind verschiedene Hydrophobierungssub-
- **F26:**: stanzen (Fluorsilane mit gekoppelter Aminogruppe die hydrophob wirken)
- **Römisch VI:**: beschreibt die Ansatznummer der Epoxid-Harzmodifizierung
(z.B. EP19AE/VI ist der 6. Ansatz zur Herstellung eines niedermolekularen Epoxid-Harzes mit Kopplungssubstanz)
- **2:**: ist die Konzentration an Hydrophobierungssubstanz
- **Clearcoat U-**: ist ein hydrophobes kommerzielles Sol-
- **111:**: Gel-Material

Mit jedem Material wurden jeweils 4 Teflonstents beschichtet.

Da die Innenbeschichtung der Röhrchen zunächst nur als Laborversuch durchgeführt wurde, konnte eine vollständige und optimale Beschichtung der Innenseite seitens des Herstellers nicht garantiert werden. Trotzdem wurden alle gefertigten Röhrchen den Versuchen zugeführt.

Jede Beschichtung wurde im Triplett mit Bakteriensuspension sowie je einer Negativkontrolle mit Antibiotikazusatz untersucht.

Als Positivkontrolle für Bakterienwuchs auf Oberflächen wurde zusätzlich ein einfacher Silikonschlauch mit ungleichmäßiger Oberfläche untersucht.

Zunächst wurden alle Präparate mit einem Skalpell der Länge nach halbiert und in etwa 2,5 cm lange Stücke geschnitten.

Danach wurden die Prothesenhälften mit Hilfe einer Pinzette in waagerechter Position in 12-Loch-Zellkulturplatten eingebracht. Hierbei wurde die Innenseite der Prothesen parallel zur Schwenkrichtung angeordnet, um den physiologischen Gallefluss durch einen Stent zu imitieren. Damit schwerkraftbedingte Ablagerungen ausgeschlossen werden konnten, wurden die Proben zusätzlich um 90° gekippt.

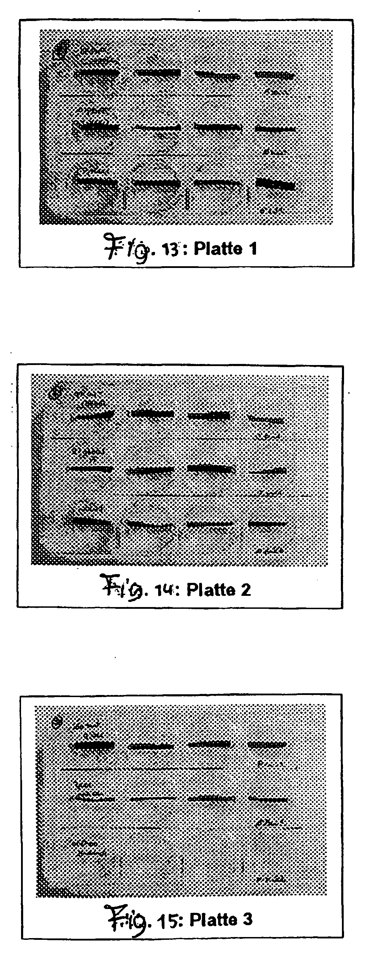

Die Fig. 13 bis 15 zeigen die drei bestückten Versuchsplatten.

Der in Falcon-Tubes eingefrorene Galle-Pool wurde portionsweise in einem Wasserbad bei 37 °C aufgetaut.

Die tiefgefrorenen Bakterien-Tubes wurden schonend auf Zimmertemperatur erwärmt.

Als Antibiotikum wurde Doxycyclin "Vibravenös"^{®} SE (Fa. Pfizer) verwendet.

Zu jeder Probe in den Zellkulturplatten wurden mit einer Pipette 3 ml des aufgetauten Galle-Pools hinzugefügt.

### Ansatz mit Bakterien:

Ein Tube mit 1 ml Bakteriensuspension enthielt 80 x 10⁶ Keime.

Um eine definierte Anzahl von 2 x 10⁶ keinen / ml Galle zu erhalten wurden bei drei von vier Proben jedes zu testenden Materials 75 µl Suspension zugesetzt.

### Ansatz mit Antibiotikum:

Die vierte Probe jedes Materials wurde als Negativkontrolle zum Ausschluß von Bakterienwachstum nur mit einem Antibiotikum ohne Bakterienzusatz inkubiert.

Das Antibiotikum sollte zusätzlich etwaige Verunreinigungen durch Bakterien der Umgebungsluft vermeiden. Ein geeignetes Wirkungsspektrum hierfür liefert das Breitspektrumantibiotikum Doxycyclin.

Um die vom hiesigen Mikrobiologischen Institut empfohlene Wirkkonzentration von 10 µg Antibiotikum / ml Galle zu erreichen, wurde den 3 ml Galle jeweils 1,5 µl Doxycyclin zugefügt.

**Tabelle 3 zeigt die Inkubationsansätze**

| | | | **1** | **2** | **3** | **4** |
|---|---|---|---|---|---|---|
| | | | | | | |
| **Platte 1** | **A** | EP 19 AE/VI -F88/2 | 3 ml Galle + 75 µl Bakt-susp. | 3 ml Galle + 75 µl Bakt.susp. | 3 ml Galle + 75 µl Bakt.susp. | 3 ml Galle + 1,5 µl Doxy |
| | **B** | EP 50 AE / VI-F 88 / 2 | 3 ml Galle + 75 µl Bakt.susp. | 3 ml Galle + 75 µl Bakt.susp. | 3 ml Galle + 75 µl Bakt.susp. | 3 ml Galle + 1,5 µl Doxy |
| | **C** | EP 19 AE / VI -F26 / 2 | 3 ml Galle + 75 µl Bakt.susp. | 3 ml Galle + 75 µl Bakt.susp, | 3 ml Galle + 75 µl Bakt.susp. | 3 ml Galle + 1.5 µl Doxy |
| | | | | | | |
| **Platte 2** | **D** | EP 50 AE / VI-F 26 / 2 | 3 ml Galle +75 µl Bakt.susp. | 3 ml Galle + 75 µl Bakt.susp. | 3 ml Galle + 75 µl Bakt.susp. | 3 ml Galle + 1,5 µl Doxy |
| | **E** | EP 19 AE / VI | 3 ml Galle + 75 µl Bakt.susp. | 3 ml Galle + 75 µl Bakt.susp. | 3 ml Galle + 75 µl Bakt.susp. | 3 ml Galle + 1.5 µl Doxy |
| | **F** | EP 50 AE / VI | 3 ml Galle + 75 µl Bakt.susp. | 3 ml Galle + 75 µl Bakt.susp. | 3 ml Galle + 75 µl Bakt.susp. | 3 ml Galle + 1,5 µl Doxy |
| | | | | | | |
| **Platte 3** | **G** | Clearcoat U-III | 3 ml Galle + 75 µl Bakt.susp. | 3 ml Galle + 75 µl Bakt.susp. | 3 ml Galle + 73 µl Bakt.susp. | 3 ml Galle + 1.5 µl Doxy |
| | **H** | Teflon unbeschichtet | 3 ml Galle + 75 µl Bakt.susp. | 3 ml Galle + 75 µl Bakt.susp. | 3 ml Galle + 75 µl Bakt.susp. | 3 ml Galle + 1,5 µl Doxy |
| | **I** | Silikonschlauch | 3 ml Galle + 75 µl Bakt.susp. | 3 ml Galle + 75 µl Bakt.susp. | 3 ml Galle + 75 µl Bakt.susp. | 3 ml Galle + 1,5 µl Doxv |
| **Tabelle 3: Inkuballonsansätze der Zellkulturplatten** | | | | | | |

Die Zellkulturplatten wurden nach dem Befüllen mit einem Deckel verschlossen. Zusätzlich wurden die einzelnen Platten mit Parafilm abgedichtet, um ein für E.coli geeignetes sauerstoffarmes Milieu zu schaffen und eine Kontamination sowohl des Inkubators als auch der Schwenkvorrichtung zu vermeiden.

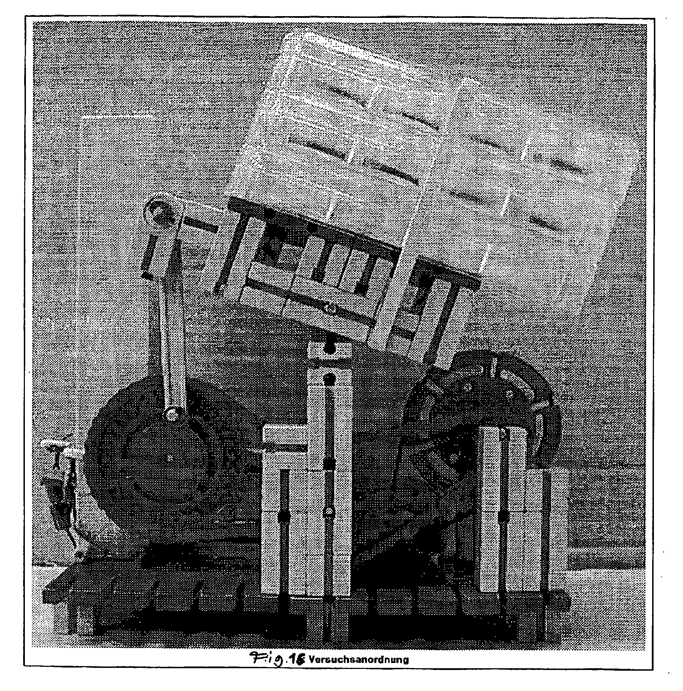

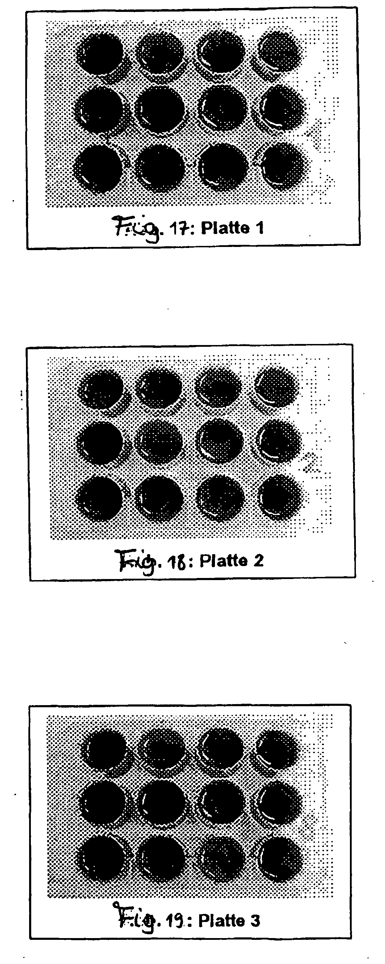

Die Fig. 16 bis 19 verdeutlichen die Versuchsanordnung.

Insgesamt wurden die Präparate 35 Tage bei 37 °C inkubiert.

Das Bakterienwachstum wurde mit täglichen Ausstrichen auf Agaroseplatten kontrolliert.

Zusätzlich wurde das Überleben der empfindlichen Keime während des gesamten Beobachtungszeitraums stichprobenartig alle zwei Tage mit Hilfe des Fluoreszenzmikroskops untersucht.

Um einen Mangel an Nährstoffen zu vermeiden, wurde bei den Ansätzen mit Bakteriensuspension alle zwei Tage 1 ml Galle entnommen und durch 1 ml frische Galle aus dem Pool ersetzt. Einmal pro Woche wurde der komplette Bakterienansatz analog des oben beschriebenen Inkubationsansatzes ausgetauscht, da ein sicheres Überleben der empfindlichen Keime nicht gewährleistet war.

Die Sterilität der Ansätze mit Doxycyclin wurde ebenfalls täglich durch Ausstriche kontrolliert. Entsprechend der Halbwertszeit von etwa 20 Stunden wurden alle 4 Tage erneut 1,5 µl Doxycyclin zu den Ansätzen mit Antibiotikum hinzugefügt.

Die Batterien der Schwenkvorrichtung wurden wöchentlich ausgetauscht, um Spannungsschwankungen und eine damit verbundene Herabsetzung der Schwenkfrequenz auszuschließen.

Der korrekte Versuchsablauf wurde zweimal täglich, jeweils morgens und abends kontrolliert.

In den 35 Tagen Inkubationszeit wurden die Proben alle 2 Tage fluoreszenzmikroskopisch untersucht, um ein mögliches Absterben der Bakterien frühzeitig zu erkennen. Die Präparation hierfür sowie der Ablauf der Untersuchung werden nachfolgend erläutert.

Für die rasterelektronenmikroskopischen Untersuchungen wurden alle Proben mit einer Pinzette in neue Zellkulturplatten überführt und jeweils mit 3 ml 3%igem Glutaraldehyd (GA) in 0,05 molarem Phosphatpuffer (PBS) fixiert. Hierfür wurde 12, 5 ml 25% GA und 25 ml 0,2 m PBS zu 100ml destilliertem Wasser aufgefüllt. Bis zur weiteren Präparation wurden die Platten bei 4 °C aufbewahrt.

Zur Untersuchung der Fluoreszenz der Bakterien diente ein Auflichtfluoreszenzmikroskop der Firma zeiss vom Typ Axiovert 135. Die Proben konnten bei verschiedenen Vergrößerungen betrachtet werden. Auffällige Befunde wurden mit Hilfe einer integrierten Digitalkamera der Firma Canon festgehalten.

Das Verfahren der Fluoreszenzmikroskopie beruht darauf, daß gewisse Moleküle einen Teil des von ihnen absorbierten Lichts in Form einer langwelligeren (energieärmeren) Strahlung wieder abgeben.

Eine Quecksilberdampf-Lampe emittiert kurzwellige Strahlung (weißes Licht).

In einem Erregerfilter wird die für die Anregung des Fluorochroms geeignete Wellenlänge herausgefiltert.

Im Strahlengang zwischen Objektiv und Okular befindet sich ein Sperrfilter, der nur für langwellige, also durch Emissionen am Präparat erzeugte "Sekundärstrahlung" (Fluoreszenz) durchlässig ist.

Laut Hersteller liegt das Anregungsoptimum von DsRed2 bei 558 nm, sowie sein Emissionsmaximum bei 583 nm.

Dementsprechend wurden zur Betrachtung der Proben geeignete Anregungs- und Emissionsfilter verwendet.

Für die Untersuchung der Proben wurde keine spezielle Präparation benötigt.

Die einzelnen Proben wurden mit einer Pinzette aus den mit Galle gefüllten Platten entnommen und auf einem Objektträger unter dem Mikroskop betrachtet.

Hierbei mußte zügig gearbeitet werden, um ein Austrocknen der Proben sowie das Absterben des Bakterienansatzes zu verhindern. Nach der vollständigen Untersuchung wurden die Proben zur weiteren Inkubation wieder in die Zellkulturplatten überführt.

Für diese Studie wurde ein Elektronenmikroskop der Firma Zeiss, Deutschland vom Typ DSM 940 verwendet.

Mit dem Mikroskop ist eine Spiegelreflexkamera verbunden, mit der auffällige Befunde der untersuchten Proben festgehalten werden konnten.

Die Rasterelektronenmikroskopie eignet sich zur Darstellung leitender Oberflächen. Biologische Objekte müssen daher zunächst durch Aufdampfen eines Metallfilms leitend gemacht werden.

Der nutzbare Vergrößerungsbereich reicht von etwa 5-bis 100.000fach. Das erreichbare Auflösungsvermögen ist im Vergleich zum Lichtmikroskop um etwa den Faktor 100 besser und liegt bei einigen Nanometern.

Durch das Erhitzen eines Wolframzylinders (Kathode) wird ein Primärelektronenstrahl erzeugt, der durch einen Steuerzylinder (Wehnelt Zylinder) fokussiert und durch eine Anode beschleunigt wird.

Anschließend passiert der Primärelektronenstrahl elektromagnetische Spulen, erfährt dadurch eine feine Bündelung und trifft fokussiert auf das Objekt auf.

Mit Hilfe eines XY-Ablenksystems wird ein Zeilenraster erzeugt. Die Objektoberfläche wird zeilenförmig abgetastet, wodurch sogenannte Sekundärelektronen erzeugt werden. Diese werden von einem Detektor aufgefangen, hier entstehen in einem Szintillator Lichtblitze, die von einem Photomultiplier elektrisch rückverwandelt und verstärkt werden. Abschließend wird dieses elektrische Signal auf einem Monitor sichtbar gemacht.

Kurz zu erwähnen sind weitere Detektionsmethoden, um Rückstrahlelektronen oder Röntgenstrahlung einzufangen. Hiermit lassen sich die Dichte und die stoffliche Zusammensetzung eines Objekts ermitteln.

Das zu betrachtende Objekt ist in der Probenkammer auf einem Probentisch befestigt und kann mechanisch in verschiedene Richtungen bewegt werden:
1.) X-Achse: Links- und Rechts-Bewegung
2.) Y-Achse: Vor- und Zurück-Bewegung
3.) Z-Achse: Auf- und Ab-Bewegung
4.) Kippung: 0° - 90°-Kippung möglich
5.) Rotation: Drehung um die eigene Achse

Grundvoraussetzung für die Untersuchung organischer Objekte mit Hilfe des REM sind absolut trockene Präparate, sowie leitende Oberflächen.

Beim Trocknen einer organischen Probe an freier Luft können durch starken Wasserverlust und der daraus resultierenden hohen Oberflächenspannung Strukturartefakte entstehen.

Um dies zu verhindern wurden die Proben in Glutaraldehyd fixiert und anschließend mittels einer aufsteigenden Alkoholreihe entwässert.

Zur Trocknung der Präparate wurde die Kritisch-Punkt-Trocknung angewendet.

Dieses Verfahren beruht auf der Tatsache, daß oberhalb des kritischen Punktes einer Flüssigkeit kein Unterschied mehr zwischen flüssigem und gasförmigem Aggregatzustand besteht und somit beim Trocknen keine Auswirkungen durch Spannungen auf das Präparat zu erwarten sind. So konnten die empfindlichen Bakterien und Proteine auf den Prothesen schonend konserviert werden. Der kritische Punkt von Wasser ist mit 374 °C und 220 bar schwer erreichbar. Aus diesem Grund wurde Kohlendioxid verwendet, da hier der kritische Punkt von 31 °C und 74 bar ohne Zerstörung der Proben leicht zu erreichen ist.

Bis zur weiteren Verarbeitung wurden die Proben in einem evakuierten Exsikkator aufbewahrt.

Bei isolierenden Präparaten kommt es durch den Beschuß von Elektronen zu Aufladungen und somit zu Bildstörungen. Die Oberfläche muß aus diesem Grund mit einer leitfähigen Schicht überzogen werden. Dies wird durch das Besputtern erreicht.

Zum Aufbringen einer Goldschicht auf die Proben wurde das SEM-Coating System der Firma Bio-Rad (Microscience Division) verwendet.

Die getrockneten Präparate wurden mit Leitsilber auf zuvor beschriftete Stiftprobenteller aufgeklebt, um eine bessere elektrische Leitung zu ermöglichen.

Danach wurden jeweils 3 Präparate gleichzeitig in den Sputter Coater gegeben.

Die Luft innerhalb der Kammer wurde dann gegen Argon ausgetauscht, damit der Elektronenfluß nicht durch andere Moleküle abgelenkt wird. Durch das Spülen mit Argon entsteht ein Druck von 10,7 Pa (0,08 torr). Alle Präparate wurden etwa 2 Minuten lang mit Gold besputtert. Anschließend wurde das System wieder belüftet und die mit Gold beschichteten Präparate aus dem Gerät entnommen.

Bis zur Betrachtung im Elektronenmikroskop wurden die Proben wiederum in einem mit Trockenmittel gefüllten und mit einer Wasserstrahlpumpe evakuierten Exsikkator aufbewahrt.

Die 36 Proben des Versuches sowie je eine unbenutzte Probe jedes Materials wurden zunächst mit dem REM komplett mäanderförmig durchgemustert, um eine Übersicht über typische oder auffällige Befunde zu erhalten. Genauere Untersuchungen aller Oberflächen erfolgten mit bis zu 10.000fachen Vergrößerungen. Zur Dokumentation wurden von jeder Probe mindestens drei Bilder angefertigt.

Zusätzlich wurden die Proben in verschiedene Gruppen eingeteilt, um eventuelle Gemeinsamkeiten und Unterschiede besser entdecken und beschreiben zu können.

Verglichen wurden sowohl die Beschichtungen mit nieder- und hochmolekularen Epoxidanteilen untereinander als auch gegeneinander.

Ebenso wurde der Einfluß der hydrophoben Substanzen miteinander verglichen.

Es wurden willkürlich folgende Untersuchungsgruppen für die spätere Auswertung gewählt:

| **Gruppe** | | |
|---|---|---|
| **1:** | niedermolekulare Epoxidharze (EP19) 190 Mol | EP19AE/VI-F88/2 |
| | | EP19AE/VI-F26/2 |
| | | EP19AE/VI |
| **Gruppe** | hochmolekulare Epoxidharze | |
| **2:** | (EP50) 500 Mol | EP50AE/VI-F88/2 |
| | | EP50AE/VI-F26/2 |
| | | EP50AE/VI |
| **Gruppe** | hydrophobe Substanz 88 | |
| | | |
| **3:** | | EP19AE/VI-F88/2 |
| | | EP50AE/VI-F88/2 |
| **Gruppe** | hydrophobe Substanz 26 | |
| **4:** | | EP19AE/VI-F26/2 |
| | | EP50AE/VI-F26/2 |
| **Gruppe** | Clearcoat U-111 | |
| **5:** | | Clearcoat U-111 |
| | | vs. alle anderen Gruppen |
| **Gruppe** | Teflon unbeschichtet | |
| **6:** | | Teflon unbe schichtet vs. alle ande ren Gruppen |
| **Gruppe** | Silikonschlauch | |
| **7:** | | Silikonschlauch |
| | | vs. alle anderen Gruppen |

Mit der vereinfachten Methode des langsamen Hin- und Herschwenkens der Galle in kleinen Inkubationsgefäßen war eine kontinuierliche Perfusion der Untersuchungsmaterialien mit Galle gesichert und die Biofilm- und Sludgebildung auf den verschiedenen Kunststoffoberflächen konnte leicht untersucht werden.

Nach 35 Tagen Inkubationszeit wurde die Galle aus allen Zellkulturplatten mit einer Wasserstrahlpumpe entfernt und die Proben zunächst mit bloßem Auge makroskopisch beurteilt.

Der Überstand des gefilterten Galle-Pools zeigte noch in 4 von 10 Ausstrichen die Anwesenheit von Keimen. Da für den Versuch keimfreie Galle gefordert war, wurde der Pool mit Gamma-Strahlung sterilisiert.

Nach der Bestrahlung mit 30 Gy im Blutbestrahlungsgerät des *Instituts für Transfusionsmedizin des UKE* waren alle Ausstriche keimfrei, der Galle-Pool konnte somit als steril angesehen werden.

Auf den meisten Proben befand sich ein fest haftender Schleimfilm. Zum Teil waren die Prothesen verkrustet.

Auf den Oberflächen der Stents mit den Beschichtungen EP50AE/VI und EP19AE/VI war der Schleim allerdings nicht so fest und löste sich bei der Fixierung für die Rasterelektronenmikroskopie im Fixierungsmedium.

Auch konnte beobachtet werden, daß der Schleim auf den unbeschichteten Teflonstents dicker und fester war als auf allen anderen Proben.

Der Silikonschlauch war so porös geworden, daß er beim Anfassen mit der Pinzette fast zerbröselte. Trotzdem wurden diese Proben wie die übrigen weiterverarbeitet, allerdings gingen sie nicht in die Wertung ein.

### Ansatz mit Bakterien

Durch regelmäßige Ausstriche auf Agaroseplatten wurde die Keimzahl im Inkubationsansatz festgestellt. Die entstandenen Kolonien wurden manuell ausgewählt, es wurden Keimzahlen von 1,9 x 10⁶ bis 3,7 x 10⁶ / ml Galle festgestellt. Mit dem regelmäßigen Zusatz frischer Keime konnte die angestrebte Anzahl von mindestens 2 x 10⁶ Keimen pro ml Galle aufrecht erhalten werden.

### Ansatz mit Antibiotikum

Die Proben ohne Bakterienzusatz zeigten sich während der ersten beiden Wochen der Inkubationszeit komplett keimfrei. Danach wurde in vereinzelten Ausstrichen jedoch eine bakterielle Kontamination festgestellt, allerdings lagen hier erheblich niedrigere Keimzahlen von ca. 1,5 x 10⁵ Keimen / ml Galle im Vergleich zu den Proben mit Bakterienzusatz vor. Durch eine einmalige Erhöhung der regelmäßig zugeführten Doxycyclin-Dosis auf 20 µg (entspricht 3 µl Antibiotikum / ml Galle) konnten die Keime in diesen Ansätzen jedoch vollständig abgetötet werden, so daß im Verlauf alle weiteren Ausstriche keimfrei waren.

Fluoreszenzmikroskopische Untersuchungen dienten der Verlaufsbeobachtung des Versuchs.

Alle zwei Tage konnte so zusätzlich zu den Ausstrichen auf Agaroseplatten das Überleben der Bakterien kontrolliert werden.

Aufgrund der Expression des Fluoreszenzplasmids pDsRed2 leuchteten die Keime auf den Stentoberflächen hellrot auf. Es konnte hierbei allerdings nicht zwischen fest haftenden und freien Bakterien unterschieden werden.

Da dem Inkubationsmedium kein Ampicillin zugesetzt wurde, verloren die Keime unter diesem Selektionsdruck ihr Fluoreszenzplasmid, die Expression der roten Fluoreszenz war somit nur für ungefähr 24 bis maximal 36 Stunden zu beobachten. Im Lichtmikroskop ohne Fluoreszenzanregung waren aber noch deutlich lebende Keime erkennbar. Durch die regelmäßige Zugabe frischer Bakteriensuspension konnte die Fluoreszenz über den gesamten Zeitraum hinweg beobachtet werden.

Es folgt eine Beschreibung der auffälligen Befunde, dabei sind jeweils alle Proben der verschiedenen Beschichtungen zusammengefaßt.

Obwohl die Ausstriche der jeweils 4. Probe einer Untersuchungsreihe nach zwischenzeitlicher Kontamination keimfrei waren, zeigten sich rasterelektronenmikroskopisch auch auf diesen Proben Bakterien. Die Anzahl war aber nicht vergleichbar mit den Keimzahlen auf den übrigen Prothesen, so daß im Folgenden nur die Befunde der Proben mit Bakterienzusatz beschrieben werden. Auch zeigten diese Proben keinen Proteinfilm oder Sludgebildung.

Diese Ergebnisse werden zunächst einzeln vorgestellt, später folgt ein Vergleich der gebildeten Untersuchungsgruppen.

Es zeigte sich im Rohzustand der unbenutzten Proben eine feine Rillenstruktur der Prothesenoberflächen, dabei waren die Oberflächen der beschichteten Stents schärfer konturiert als die der herkömmlichen Teflonstents. Die feine Nanostrukturierung der einzelnen Beschichtungen war mit dem Auflösungsvermögen des REM allerdings nicht darstellbar, so daß grob keine Unterschiede der Oberflächen festgestellt werden konnten. Der Silikonschlauch hatte ebenfalls eine fein gerillte Oberfläche, die aber sehr verwaschen, fast schleimähnlich erschien.

### A 1-4: EP19AE/VI-F88/2:

Es waren dicke Beläge zu erkennen. Bakterien waren zu großen Konglomeraten in mehreren Schichten eingemauert. Teilweise standen die Bakterien über Fäden miteinander in Verbindung, die Fortsätzen ähnelten und stellten damit auch Verbindungen zu kristalloiden Strukturen her. Mehr als die Hälfte der gesamten Oberfläche war mit Sludge bedeckt, der einschichtige Proteinfilm war gleichmäßig wie eine Folie über die gesamte Oberfläche verteilt. Daneben waren diffus einzelne Bakterien verteilt. Die gerillte Stentoberfläche war in allen Präparaten erkennbar, an manchen Stellen zeigten sich aber Unregelmäßigkeiten und vor allem hier hafteten dann vermehrt Bakterien.

### B 1-4: EP50AE/VI-F88/2:

Bei diesen Präparaten zeigten sich die Bakterienkonglomerate hauptsächlich auf der Oberkante der Rillen. Die Bakterien waren untereinander teilweise verbunden. Der mehrschichtige Sludge zog sich bandförmig über die Prothesen, darunter war die Oberfläche nicht mehr zu identifizieren. Insgesamt war weniger als die Hälfte der Prothesen mit Sludge bedeckt. Es war eine dünne gleichmäßige Folienschicht erkennbar, die an zwei Stellen aufgerissen schien und sich von der Unterlage löste. An Stellen ohne Sludge waren noch die feinen Rillen der Stentoberflächen zu erkennen. Auf der gesamten Oberfläche waren zusätzlich überall einzelne Bakterien verteilt.

### C 1-4: EP19AE/VI-F26/2:

Es zeigten sich dicke Konglomerate mit mehrschichtig eingemauerten Bakterien, die auch untereinander Verbindungen über ihre Pili eingingen. Daneben fanden sich Strukturen, die Pflanzenfasern ähnelten und in die gleichmäßige Proteinfolienschicht eingebettet waren. Teilweise waren freie Flächen zu erkennen, die nur mit einer dünnen Folie aber nicht mit Bakterien bedeckt waren. Insgesamt war aber mehr als die Hälfte der Oberfläche bedeckt. An manchen Stellen war der Proteinfilm von der Oberfläche abgelöst und der darüber liegende Sludge war gerissen. Es waren viele diffus verteilte, teils in die Folie eingewachsene Bakterien auf der gesamten Oberfläche zu sehen.

### D 1-4: EP50AE/VI-F26/2:

Die Folienschicht erschien netzartig und unregelmäßig. An einigen Stellen war sie abgeplatzt. Vor allem an diesen unebenen Kanten bildeten sich Sludgekonglomerate. Diese bedeckten weniger als die Hälfte der Prothesen, waren aber in mehreren Schichten aufgebaut. Die Oberflächenstruktur war teilweise nicht mehr erkennbar. Überall waren einzelne Bakterien verstreut, die manchmal kurze Ketten bildeten und eine fadenähnliche Verbindung zur Folienschicht zeigten. Kristalloide Strukturen waren in den Proteinfilm eingemauert und bildeten Kontaktflächen für Bakterienhaufen.

### E 1-4: EP19AE/VI:

Auf diesen Prothesen zeigte sich eine regelmäßige dünne Folienschicht über der gesamten Oberfläche. Es waren nur vereinzelt Bakterienhaufen zu erkennen, die auch nur teilweise mehrschichtig waren. Insgesamt war weniger als 25 % der Prothesenoberflächen mit Sludge bedeckt. Den überwiegenden Anteil bildeten einzelne, diffus verteilte Bakterien, die keine Konglomerate bildeten. Große Bereiche der Prothesen waren völlig frei von Bakterien und zeigten an diesen Stellen nur einen sehr dünnen Proteinfilm.

### F 1-4: EP50AE/VI:

Auf diesen Proben zeigte sich kein Sludge. Es war eine sehr dünne Folie auf der gesamten Oberfläche zu erkennen. Die Struktur der Oberfläche war im Ganzen sehr deutlich sichtbar. Neben großen bakterienfreien Bereichen zeigten sich sonst nur locker verteilte, einzeln liegende Bakterien. Eine Probe zeigte einen Defekt der Oberfläche, der wie eine tiefe Furche erschien. Hier war die einzige Stelle, an der die Bakterien enger zusammen lagen und Verbindungen untereinander gebildet hatten. Diese Bakterienhaufen ähnelten dem auf den Prothesen mit anderen Beschichtungen beobachteten Sludge, waren aber wesentlich dünner.

### G 1-4: Clearcoat U-111:

Auf der gesamten Oberfläche zeigte sich ein dicker Proteinfilm, in den viele Bakterien teilweise mehrschichtig eingemauert waren. Darunter war die gerillte Oberflächenstruktur noch angedeutet zu erkennen. Partikulär waren auf dem Proteinfilm dickere Bakterienschichten vorhanden, insgesamt war aber weniger als die Hälfte der Oberfläche mit Sludge bedeckt. Der Folienfilm war an mehren Stellen gerissen. Hier konnte man dann sehr gut die enorme Dicke dieses Films erkennen.

### H 1-4: Teflon unbeschichtet:

Mehrschichtiger Sludge zeigte sich auf einem generalisierten dicken Proteinfilm.

Auf allen Proben waren keine freien Stellen mehr erkennbar, flächendeckend hafteten Bakterien überall auf der Oberfläche. Die Rillenstruktur der Prothesen war nur noch sehr unscharf sichtbar. An einigen Stellen einer Probe war die Folienschicht gerissen und die Stentoberfläche kam zum Vorschein. Hier konnte man deutlich die Dicke des Proteinfilms und die Mehrschichtigkeit der Bakterienhaufen erkennen.

Die Proben waren schon vor der Fixierung für die Rasterelektronenmikroskopie sehr porös. Die Besputterung funktionierte nur bei zwei der vier Proben.

Auf diesen waren dann aufgequollene Materialoberflächen zu erkennen. Die Bakterien wirkten wie in das Material eingefressen. Insgesamt war es schwierig, mit dem REM Strukturen darzustellen.

Diese Proben wurden daraufhin aus der Wertung genommen.

**Tabelle 4 fasst die Auswertung der Probenbefunde zusammen.**

| | | **Sludge** | **Proteinfilm** | **einzelne Bakterien** |
|---|---|---|---|---|
| **1** | **EP19AE/VI-F8812** | +++ | ++ | ++ |
| **2** | **EP50AE/VI-F88/2** | ++ | ++ | ++ |
| **3** | **EP19AE/VI-F26/2** | +++ | ++ | ++ |
| **4** | **EP50AE/VI.F26/2** | ++ | ++ | ++ |
| **5** | **EP19AE/VI** | + | ++ | + |
| **6** | **EP50AE/VI** | - | + | + |
| **7** | **Clearcoat U-111** | ++ | +++ | ++ |
| **8** | **Teflon unbeschichtet** | +++ | +++ | ++ |
| **9** | **Silikonschlauch** | 0 | 0 | 0 |
| **Tabelle 4: Oberflächeneigenschaften** | | | | |

**Legende zu Tabelle 4:**

| **Sludge** | | **Proteinfilm** | | **einzelne Bakterien** | |
|---|---|---|---|---|---|
| +++ | mehrschichtig, > 50% der Oberfläche | +++ | mehrschichtig, gleichmäßig | ++ | gleichmäßig, diffus |
| ++ | mehrschichtig. 25-50 % der Oberfläche | ++ | einschichtig, gleichmäßig | + | vereinzelt |
| + | ein-/mehrschichtig, < 25 % der Oberfläche | + | sehr dünn, gleichmäßig | 0 | nicht beurteilbar |
| - | nicht vorhandan | 0 | nicht beurteilbar | | |
| 0 | nicht beurteilbar | | | | |

Zum vergleich der Beschichtungen wird die Tabelle 4 jeweils als Grundlage benutzt. Fur die Erklärung der Felder siehe die Beschreibung der Legende für Tabelle 4 in Kapitel 4.6.3

### Gruppe 1: niedermolekulare Epoxidharze (EP19) 190 Mol

| | | Sludge | Proteinfilm | einzelne Bakterien |
|---|---|---|---|---|
| 1 | EP19AE/VI-F88/2 | +++ | ++ | ++ |
| 3 | EP19AE/VI-F26/2 | +++ | ++ | ++ |
| 5 | EP19AE/VI | + | ++ | + |

Es zeigten sich auf den Prothesen mit der Beschichtung EP19AE/VI nur vereinzelt Bakterienhaufen, im Gegensatz zu den Prothesen mit zugesetzter Hydrophobierungssubstanz (EP19AE/VI-F88/2 und EP19AE/VI-F26/2). Hier waren deutlich mehr Ansammlungen von Bakterien zu erkennen und mehr als die Hälfte der Oberfläche war jeweils mit Sludge bedeckt. Ebenso war der Folienfilm auf den Prothesen mit EP19AE/VI-Beschichtung sehr viel dünner. Die Beschichtung EP19AE/VI-F88/2 zeigte wiederum eine gleichmäßigere Folienschicht als bei den mit EP19AE/VI-F26/2 beschichteten Prothesen, die häufig eingerissene und aufgeworfene Proteinschichten aufwiesen. Im Bereich der niedermolekularen Epoxidharze zeigt sich in Bezug auf die Sludgebildung die Beschichtung EP19AE/VI ohne zusätzliche Hydrophobierung vorteilhaft gegenüber den hydrophobierten Substanzen.

### Gruppe 2: hochmolekulare Epoxidharze (EP50) 500 Mol

| | | Sludge | Proteinfilm | einzelne Bakterien |
|---|---|---|---|---|
| 2 | EP50AE/VI-F88/2 | ++ | ++ | ++ |
| 4 | EP50AE/VI-F26/2 | ++ | ++ | ++ |
| 6 | EP19AE/VI | - | + | + |

Die hochmolekularen Epoxidharze zeigten insgesamt die besten Ergebnisse. Auffällig war hierbei die Beschichtung EP50AE/VI, auf diesen Prothesen waren überhaupt keine großen Sludgeansammlungen zu erkennen. Auch waren hier immer wieder völlig bakterienfreie Areale zu entdecken. Die Folienschicht war bei den hydrophobierten Beschichtungen (EP50AE/VI-F88/2 und EP50AE/VI-F26/2) zwar auch so dünn wie bei EP50AE/VI, erschien aber teilweise netzartig und unregelmäßig und war sogar an manchen Stellen aufgerissen, an diesen unregelmäßigen Stellen bildeten sich dann vermehrt Bakterienhaufen. Es bleibt festzuhalten, daß die Beschichtung EP50AE/VI als einzige keine typische Sludgeentwicklung zeigte.

### Gruppe 3: hydrophobe Substanz 88

| | | Sludge | Proteinfilm | einzelne Bakterien |
|---|---|---|---|---|
| 1 | EP19AE/VI-F88/2 | +++ | ++ | ++ |
| 2 | EP50AE/VI-F88/2 | ++ | ++ | ++ |

Der Vergleich dieser beiden Beschichtungen ließ einen Vorteil für die hochmolekulare Substanz EP50AE/VI-F88/2 erkennen. Hier war weniger als die Hälfte der Prothesenoberflächen mit Sludge bedeckt, während auf den niedermolekularen Beschichtungen EP19AE/VI-F88/2 dicke Beläge über mehr als 70 % der Oberfläche ausmachten.

### Gruppe 4: hydrophobe Substanz 26

| | | Sludge | Proteinfilm | einzelne Bakterien |
|---|---|---|---|---|
| 3 | EP19AE/VI-F26/2 | +++ | ++ | ++ |
| 4 | EP50AE/VI-F26/2 | ++ | ++ | ++ |

Im Vergleich dieser Hydrophobierungssubstanz fiel ein ähnliches verteilungsmuster wie bei der Substanz 88 auf. Wieder zeigte die hochmolekulare Beschichtung EP50AE/VI-F26/2 einen Vorteil gegenüber der niedermolekularen Beschichtung

EP19AE/VI-F26/2. Dort waren dicke Konglomerate mit mehrschichtigen Bakterienhaufen zu erkennen, die sich über mehr als die Hälfte der Oberfläche erstreckten, während bei EP50AE/VI-F26/2 weniger als 50 % der Prothese mit Sludge bedeckt war.

### Gruppe 5: Clearcoat U-111

Clearcoat U-111 nimmt eine Zwischenstellung zwischen den hochmolekularen und den niedermolekularen Beschichtungen ein. Diese kommerzielle Beschichtung zeigte im Bereich der Sludgebildung Vorteile gegenüber den Beschichtungen EP19AE/VI-F88/2 und EP19AE/VI-F26/2, wies aber einen wesentlich dickeren Proteinfilm als alle anderen Beschichtungen auf. Auch waren insgesamt mehr einzelne Bakterien über die gesamte Oberfläche verteilt als bei den beiden Beschichtungen EP19AE/VI und EP50AE/VI.

### Gruppe 6: Teflon unbeschichtet

Auffällig in dieser Gruppe war die Tatsache, daß kleine Probe bakterienfreie Stellen erkennen ließ. Es zeigte sich ein flächendeckender mehrschichtiger Sludge der auch makroskopisch fester erschien, als auf allen anderen Beschichtungen. Auch hafteten überall auf der Oberfläche einzelne Bakterien auf einer dicken Folienschicht. Die Stentstruktur war nur noch sehr verwaschen zu erkennen, teilweise war sie gar nicht mehr nachweisbar. Im Vergleich mit den neuen Beschichtungsmaterialien schnitt das herkömmliche Teflonmaterial im Hinblick auf die Fragestellung dieser Arbeit aufgrund dieser deutlich stärkeren Sludgebildung am schlechtesten ab.

### Gruppe 7: Silikonschlauch

Der Silikonschlauch wurde aus der Wertung genommen, da das Material gegen Ende der Inkubationszeit begann, sich aufzulösen und auch für die Rasterelektronenmikroskopie nicht entsprechend der anderen Proben aufbereitet werden konnte. Die Darstellung mit dem REM war nur bei einer Probe möglich, somit sind im Anhang nur ein Bild eines Silikonstücks im Rohzustand sowie ein Bild des präparierten Schlauchs dargestellt.

Ein Vergleich mit den übrigen Beschichtungen war nicht möglich.

Aus dem Vergleich der willkürlich gebildeten Untersuchungsgruppen, sowie aus der Auswertung der einzelnen Beschichtungen ergibt sich insgesamt folgende Auflistung der Beschichtungsmaterialien im Hinblick auf ihre Fähigkeit, Sludgebildung zu verhindern
(Reihenfolge von 1.) = gut geeignet bis 8.) = schlecht geeignet):
1.) EP50AE/VI (hochmolekulares Epoxidharz ohne Hydrophobierungssubstanz)
2.) EP19AE/VI (niedermolekulares Epoxidharz ohne Hydrophobierungssubstanz)
3.) EP50AE/VI-F88/2 (hochmolekulares Epoxidharz mit Hydrophobierungssubstanz 88)
4.) EP50AE/VI-F26/2 (hochmolekulares Epoxidharz mit Hydrophobierungssubstanz 26)
5.) Clearcoat U-111 (kommerzielles hydrophobes Beschichtungsmaterial)
6.) EP19AE/VI-F88/2 (niedermolekulares Epoxidharz mit Hydrophobierungssubstanz 88)
7.) EP19AE/VI-F26/2 (niedermolekulares Epoxidharz mit Hydrophobierungssubstanz 26)
8.) Teflon unbeschichtet (herkömmlich verwendetes Stentmaterial)

Eine besondere Bedeutung kommt der Hydrophilie der Materialien zu. Dies hat seinen Grund darin, daß Zellen nie direkt an Materialien binden, sondern sich zunächst Proteine anlagern, an denen die Zelladhäsion stattfindet. Die Proteinbindung, die die Adsorption von Zellen erst ermöglicht, hängt somit wesentlich von den Oberflächeneigenschaften des Materials ab. Hydrophile Materialien begünstigen, hydrophobe Materialien hemmen die Zellbindung.

Die beschriebenen Sol-Gel-Beschichtungen sind nicht völlig glatt, sondern haben im Gegenteil eine im Nanometerbereich strukturierte Oberfläche. Diese hat aber so kleine Durchmesser, daß der Kontaktwinkel zwischen der Oberfläche und der benetzenden Flüssigkeit auf ein Minimum reduziert wird und die Adhäsionskräfte abnehmen. Kugelförmige Flüssigkeitstropfen können dann von diesen Oberflächen abperlen und gleichzeitig das Anhaften von Schmutzpartikeln oder Bakterien verhindern. Auf völlig unstrukturierten glatten Oberflächen, wie z.B. Teflon gleiten Flüssigkeitstropfen, dabei findet jedoch nur eine geringfügige Schmutzentfernung statt.

Alle Oberflächen, ungeachtet ihrer Struktur und ihrer chemischen Zusammensetzung, lassen sich in Bezug auf die Anhaftung von Wasser in zwei Gruppen unterteilen. Sie sind entweder hydrophil (wasserliebend) oder hydrophob (wassermeidend). Auf hydrophilen Oberflächen verteilen sich wäßrige Flüssigkeiten gleichmäßig, während sie auf hydrophoben Oberflächen abperlen. Eine analoge Einteilung läßt sich auch für ölige Stoffe, z.B. Schmutzpartikel vornehmen.

Menschlichen Galle setzt sich aus Natrium, Kalium, Chlorid, Bikarbonat, Gallensalzen, Cholesterin, Phospholipiden, Bilirubin und Proteinen zusammen, ist also eine heterogene Mischung, die sowohl wäßrige als auch ölige Anteile enthält.

Daraus folgt prinzipiell: Oberflächen von Gallengangendoprothesen sollten hydrophob und oleophob (ölabweisend) sein, um eine Verkrustung mit Sludge zu verhindern.

Untersuchungen und die praktische Anwendung zeigten aber, daß auch das zu 100% hydrophobe Teflon nicht vor Verstopfung durch Sludge geschützt ist.

Allerdings können auch rein hydrophile Beschichtungen die Adhäsion von Bakterien an den Stentoberflächen nicht verhindern.

Die hier untersuchten Sol-Gel-Beschichtungen, die sowohl hydrophobe als auch hydrophile Anteile besitzen, wiesen eine signifikant reduzierte Sludgebildung gegenüber herkömmlichem Teflonmaterial auf, wobei tendenziell die beste Wirkung bei einer hochmolekularen Beschichtung mit einem Verhältnis der Hydrophobie zur Hydrophilie von 75 zu 25 % zu beobachten war (EP50AE/VI). Eine stärkere Hydrophilierung zeigte wiederum auch einen stärkeren Sludgebefall (alle niedermolekularen Beschichtungen mit einem Verhältnis der Hydrophobie zur Hydrophilie von 50 zu 50 %).

## Patentansprüche

1. Verfahren zur Untersuchung von Sludgeablagerungen auf Materialien zur Beschichtung von Endoprothesen, **dadurch gekennzeichnet, dass** mindestens eine beschichtete Endoprothese in mindestens einem Inkubationsgefäss positioniert wird und dass das Inkubationsgefäss mindestens teilweise mit infizierter Galle gefüllt wird, sowie dass mindestens ein mit einer zu untersuchenden Endoprothese versehenes Inkubationsgefäss langsam durch hin- und herkippen hin und hergeschwenkt wird, sowie dass ein Teil der Gallenflüssigkeit regelmässig ausgetauscht wird.

2. Verfahren nach Anspruch 1, **dadurch gekennzeichnet, dass** Sludgeablagerungen auf Gallengangprothesen untersucht werden.

3. Verfahren nach Anspruch 1 oder 2, **dadurch gekennzeichnet, dass** etwa 10 Schwenkvorgänge pro Minute durchgeführt werden.

4. Verfahren nach Anspruch 1 bis 3, **dadurch gekennzeichnet, dass** der Schwenkvorgang mit einem Neigungswinkel von etwa +- 20 Grad relativ zur Horizontalen durchgeführt wird.

5. Verfahren nach einem der Ansprüche 1 bis 4, **dadurch gekennzeichnet, dass** etwa alle 2 Tage etwa 1 ml Gallenflüssigkeit ausgetauscht wird.

6. Vorrichtung zur Untersuchung von Materialien zur Beschichtung von Endoprothesen, **dadurch gekennzeichnet, dass** ein Schwenktisch zur Positionierung von Proben verschwenkbar relativ zu einer Drehachse angeordnet ist und dass zur Aufnahme der Proben auf dem Schwenktisch mindestens ein mindestens bereichsweise mit Galle gefülltes Inkubationsgefäss angeordnet ist.

7. Vorrichtung nach Anspruch 6, **dadurch gekennzeichnet, dass** die Probe als eine beschichtete Gallengangprothese ausgebildet ist.

8. Vorrichtung nach Anspruch 6 oder 7, **dadurch gekennzeichnet, dass** der Schwenktisch über ein Getriebe mit einem Motor gekoppelt ist.

9. Vorrichtung nach einem der Ansprüche 6 bis 8, **dadurch gekennzeichnet, dass** eine Drehzahl des Motors einstellbar ist.

10. Vorrichtung nach einem der Ansprüche 6 bis 9, **dadurch gekennzeichnet, dass** der Motor mit dem Schwenktisch über eine Kopplungseinrichtung zur Vorgabe eines langsamen Hin- und Herschwenkens verbunden ist.

## Claims

1. Method for the investigation of sludge deposits on materials for the coating of endoprostheses, **characterized in that** at least one coated endoprosthesis is positioned in at least one incubation vessel and **in that** the incubation vessel is at least partially filled with infected bile, and **in that** at least one incubation vessel provided with an endoprosthesis to be examined is swiveled slowly back and forth by being tipped back and forth, and **in that** part of the bile fluid is regularly replaced.

2. Method according to Claim 1, **characterized in that** sludge deposits on bile duct prostheses are investigated.

3. Method according to Claim 1 or 2, **characterized in that** approximately 10 swivel actions are performed per minute.

4. Method according to Claims 1 to 3, **characterized in that** the swivel action is performed with an angle of inclination of approximately 1 20 degrees relative to the horizontal.

5. Method according to one of Claims 1 to 4, **characterized in that** approximately 1 ml of bile fluid is replaced approximately every 2 days.

6. Device for the investigation of materials for the coating of endoprostheses, **characterized in that** a swivel table for the positioning of samples is arranged pivotably relative to a rotation axis, and **in that** at least one incubation vessel filled at least partially with bile is arranged on the swivel table in order to receive the samples.

7. Device according to Claim 6, **characterized in that** the sample is in the form of a coated bile duct prosthesis.

8. Device according to Claim 6 or 7, **characterized in that** the swivel table is coupled to a motor via a gear system.

9. Device according to one of Claims 6 to 8, **characterized in that** a speed of the motor can be adjusted.

10. Device according to one of Claims 6 to 9, **characterized in that** the motor is connected to the swivel table via a coupling device in order to establish a slow backward and forward swivelling.

## Revendications

1. Procédé d'étude de dépôts d'agrégats sur des matériaux pour le revêtement d'endoprothèses, **caractérisé en ce qu'**au moins une endoprothèse revêtue est positionnée dans au moins un récipient d'incubation, et **en ce que** le récipient d'incubation est rempli au moins en partie avec de la bile infectée, ainsi qu'en ce qu'au moins un récipient d'incubation muni d'une endoprothèse à étudier est balancé lentement d'avant en arrière par basculement d'avant en arrière, ainsi qu'en ce qu'une partie du liquide biliaire est régulièrement remplacée.

2. Procédé selon la revendication 1, **caractérisé en ce que** des dépôts d'agrégats sur des prothèses de voie biliaire sont étudiés.

3. Procédé selon la revendication 1 ou 2, **caractérisé en ce qu'**environ 10 processus de balancement par minute sont réalisés.

4. Procédé selon les revendications 1 à 3, **caractérisé en ce que** le processus de balancement est réalisé avec un angle d'inclinaison d'environ ± 20 degrés par rapport à l'horizontale.

5. Procédé selon l'une quelconque des revendications 1 à 4, **caractérisé en ce qu'**environ 1 ml de liquide biliaire est remplacé environ tous les 2 jours.

6. Dispositif pour l'étude de matériaux de revêtement d'endoprothèses, **caractérisé en ce qu'**une table pivotante pour le positionnement d'échantillons est agencée de manière pivotante par rapport à un axe de rotation et **en ce qu'**au moins un récipient d'incubation rempli au moins par endroits avec de la bile est agencé sur la table pivotante pour la réception des échantillons.

7. Dispositif selon la revendication 6, **caractérisé en ce que** l'échantillon est conçu sous la forme d'une prothèse de voie biliaire revêtue.

8. Dispositif selon la revendication 6 ou 7, **caractérisé en ce que** la table pivotante est couplée à un moteur par une transmission.

9. Dispositif selon l'une quelconque des revendications 6 à 8, **caractérisé en ce qu'**une vitesse de rotation du moteur est ajustable.

10. Dispositif selon l'une quelconque des revendications 6 à 9, **caractérisé en ce que** le moteur est relié avec la table pivotante par un dispositif de couplage pour le réglage d'un basculement lent d'avant en arrière.
